# EUROPEAN PATENT SPECIFICATION

(11) **EP 4 451 757 B1**
(45) Date of publication and mention of the grant of the patent: **13.05.2026**
(21) Application number: 24198476.4
(22) Date of filing: 05.10.2020
(51) Int. Cl.: H04B 7/185, H04W 56/00

(54) **METHODS FOR DYNAMIC UPDATE FOR DELAY AND DOPPLER VARIATIONS IN NON-TERRESTRIAL NETWORKS**
VERFAHREN ZUR DYNAMISCHEN AKTUALISIERUNG FÜR VERZÖGERUNGS- UND DOPPLERSCHWANKUNGEN IN NICHT-TERRESTRISCHEN NETZWERKEN
PROCÉDÉS DE MISE À JOUR DYNAMIQUE POUR DES VARIATIONS DE RETARD ET DE DOPPLER DANS DES RÉSEAUX NON-TERRESTRES

(30) Priority: 03.10.2019 US 201962910174 P
(43) Date of publication of application: 23.10.2024
(62) Divisional of application: 20789729.9
(73) Proprietor: Telefonaktiebolaget LM Ericsson (publ), 164 83 Stockholm (SE)
(72) Inventor: MÄÄTTÄNEN, Helka-Liina, 02360 ESPOO (FI); KHAN, Talha, SANTA CLARA, 95054 (US); SEDIN, Jonas, BRENTFORD, TW8 0SU (GB); LIN, Xingqin, SAN JOSÈ, 95132 (US)
(74) Representative: Ericsson

(56) References cited:
- OPPO: "Discussion on timing advance in NTN RACH", vol. RAN WG2, no. Prague, Czech; 20190826 - 20190830, 16 August 2019 (2019-08-16), XP051767548, Retrieved from the Internet <URL:http://www.3gpp.org/ftp/tsg_ran/WG2_RL2/TSGR2_107/Docs/R2-1909753.zip> [retrieved on 20190816]

## Description

### TECHNICAL FIELD

The present disclosure relates to non-terrestrial networks (NTNs) and, more particularly, to frequency and timing synchronization between a network node and a user equipment (UE) in a NTN.

### BACKGROUND

There is an ongoing resurgence of satellite communications. Several plans for satellite networks have been announced in the past few years. The target services vary, from backhaul and fixed wireless, to transportation, to outdoor mobile, to Internet of Things (IoT). Satellite networks could complement mobile networks on the ground by providing connectivity to underserved areas and multicast/broadcast services.

To benefit from the strong mobile ecosystem and economy of scale, adapting the terrestrial wireless access technologies including Long Term (LTE) and New Radio (NR) for satellite networks is drawing significant interest. For example, the Third Generation Partnership Project (3GPP) completed an initial study in Release 15 on adapting NR to support non-terrestrial networks (NTN), mainly satellite networks. See, for example, 3GPP TR 38.811, V15.0.0 (2018-08-10). This initial study focused on the channel model for the non-terrestrial networks, defining deployment scenarios, and identifying the key potential impacts. The 3GPP is conducting a follow-up study item in Release 16 on solutions evaluation for NR to support non-terrestrial networks. See, for example, "Study on solutions evaluation for NR to support nonterrestrial network", 3GPP tdoc RP-181370.

In satellite communications, the propagation delay as well as the Doppler shift experienced by a user equipment (UE) can change rapidly with time due to high speed satellite motion.

Due to the large Doppler shifts of signals transmitted from low Earth orbit (LEO) and medium Earth orbit (MEO) satellites, the perceived receive (RX) frequency of a UE can have a substantial frequency offset. Even if the satellite applies pre-compensation on the downlink (DL) signal such that the residual frequency offset is zero at a reference point (e.g., center) in each spotbeam, a non-zero Doppler shift will remain in other parts of the spotbeam. As the satellite moves, the received frequency offset will vary with time. This variation can have a substantial rate, especially for a LEO satellite.

The Round Trip Time (RTT) is constantly changing and can vary as fast as 40 µs/s in certain LEO scenarios. Timing advance (TA) maintenance in the presence of a large drift may require excessive signaling overhead in connected mode. The UE can be allowed to self-adjust its TA in between successive TA update commands. One known solution is that the network broadcasts drift information (for a reference point like the cell center) in system information which all UEs apply to maintain their timing. This simple approach has several shortcomings, e.g., the timing drift itself may vary with time and different UEs may experience different drifts at a given time.

In cases where self-adjustment by a UE cannot be assumed, a more dynamic signaling method to update delay and Doppler variation is needed.

3GPP Tdoc R2-1909753 discusses the RACH procedure in NTN scenarios based on UE capability, i.e. with or without GNSS support.

### SUMMARY

The present disclosure provides solutions for dynamic adjustment of the frequency offset and timing advance for a UE in a NTN. Details of Medium Access Control (MAC) Control Element (CE) and Downlink Control Information (DCI) based methods for indicating the timing and/or frequency adjustment commands, either separately or jointly, in the presence of delay and/or Doppler variations in NTN are provided. A terminal, also known as a user equipment (UE), can use DCI or MAC signaling to update the timing and frequency adjustment in presence of delay and Doppler variations in NTN. Further, a configurable MAC-CE design is provided for indicating commands related to timing and/or frequency adjustment. Procedures are also provided to report, during a random access procedure, the timing and frequency adjustment applied in preamble transmission.

The scope of protection sought is defined by the appended claims. Other examples and embodiments in the disclosure provide further information to better understand the invention or the context in which the claims are defined.

### BRIEF DESCRIPTION OF THE DRAWINGS

Figure 1 is an example non-terrestrial network (NTN).
Figure 2 depicts a trajectory of a GEO satellite.
Figure 3 illustrates an example of Doppler shift in a NTN.
Figure 4 illustrates the differential Doppler shift for two UEs in a NTN.
Figure 5 illustrates a message format for a Medium Access Control (MAC) Control element (CE).
Figure 6 illustrates another message format for a MAC CE.
Figure 7 illustrates a first exemplary method implement by a network node in a NTN.
Figure 8 illustrates a first exemplary method implement by a UE node in a NTN.
Figure 9 illustrates a second exemplary method implement by a network node in a NTN.
Figure 10 illustrates a second exemplary method implement by a UE node in a NTN.
Figure 11 illustrates a third exemplary method implement by a network node in a NTN.
Figure 12 illustrates a third exemplary method implement by a UE node in a NTN.
Figure 13 illustrates a fourth exemplary method implement by a network node in a NTN.
Figure 14 illustrates a fourth exemplary method implement by a UE node in a NTN.
Figure 15 illustrates a fifth exemplary method implement by a network node in a NTN.
Figure 16 illustrates a fifth exemplary method implement by a UE node in a NTN.
Figure 17 illustrates a sixth exemplary method implement by a network node in a NTN.
Figure18 illustrates a sixth exemplary method implement by a UE nod in a NTN.
Figure 19 illustrates an exemplary network node according to an embodiment.
Figure 20 illustrates an exemplary UE according to an embodiment.
Figure 21 illustrates an exemplary network node according to another embodiment.
Figure 22 illustrates an exemplary UE according to another embodiment.
Figure 23 illustrates an exemplary network node according to an embodiment.
Figure 24 illustrates an exemplary UE according to an embodiment.
Figure 25 depicts a wireless network in accordance with some embodiments.
Figure 26 depicts a user equipment in accordance with some embodiments.
Figure 27 depicts a virtualization environment in accordance with some embodiments.
Figure 28 depicts a network connected via an intermediate network to a host computer in accordance with some embodiments.
Figure 29 depicts a host computer communicating via a base station with a user equipment over a partially wireless connection in accordance with some embodiments.
Figure 30 depicts a flowchart of a method implemented in a communication system including a host computer, a base station and a user equipment in accordance with some embodiments.
Figure 31 depicts a flowchart of a method implemented in a communication system including a host computer, a base station and a user equipment in accordance with some embodiments.
Figure 32 depicts a flowchart of a method implemented in a communication system including a host computer, a base station and a user equipment in accordance with some embodiments.
Figure 33 depicts a flowchart of a method implemented in a communication system including a host computer, a base station and a user equipment in accordance with some embodiments.

These figures will be better understood by reference to the following detailed description.

### DETAILED DESCRIPTION

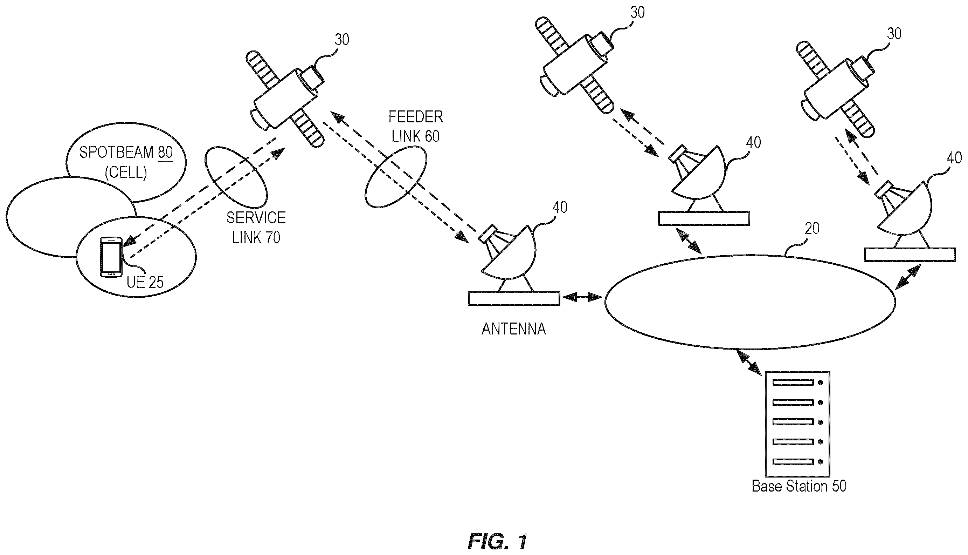

Figure 1 illustrates one example of a NTN indicated generally by the numeral 10. The NTN 10 comprises a core network 20, one or more satellites 30 that generate spotbeams 80 on the surface of the earth, one more gateways 40 providing connection between the satellites 30 and core network 20, and one or more base stations 50, also known as radio nodes or network nodes, connected to the core network 20. The base stations 50 are also referred to as Evolved NodeBs (eNBs) in LTE or 5G NodeBs (gNBs) in NR. A UE 25 communicates with a base station 50 in the NTN 10 via a satellite 30. The link between a gateway 40 and a satellite 30 is referred to as the feeder link 60, and the link between the satellite 30 and the UE 25 is referred to as the service link 70.

The link from the gateway 40 to UE 25 is often called a forward link, and the link from UE 25 to gateway 40 is often called a return link. Depending on the functionality of the satellite 30 in the system, we can consider two transponder options: (1) a bent pipe transponder in which the satellite 30 forwards the received signal back to the earth with only amplification and a shift between service link frequency and feeder link frequency and (2) a regenerative transponder in which the satellite 30 includes on-board processing to demodulate and decode the received signal and regenerate the signal before sending it back to the earth.

Depending on the orbit altitude, a satellite 30 may be categorized as low Earth orbit (LEO), medium Earth orbit (MEO), or geostationary (GEO) satellite 30 as indicated below:
LEO: typical heights ranging from 250 - 1,500 km, with orbital periods ranging from 90 - 130 minutes.

MEO: typical heights ranging from 5,000 - 25,000 km, with orbital periods ranging from 2 - 14 hours.

GEO: typical height is about 35,786 km, with an orbital period of 24 hours.

A communication satellite 30 typically generates several beams 80 over a given area. The footprint of a beam 80 is usually in an elliptic shape, which has been traditionally considered as a cell. The footprint of a beam 80 is also often referred to as a spotbeam 80. The footprint of a beam 80 may move over the earth surface with the satellite movement or may be earth fixed with some beam 80 pointing mechanism used by the satellite 30 to compensate for its motion. The size of a spotbeam 80 depends on the system design, which may range from tens of kilometers to a few thousands of kilometers.

The two main physical phenomena that affect satellite communications system design are the long propagation delay and Doppler effects. The Doppler effects are especially pronounced for LEO satellites.

### Propagation Delays

Propagation delay is a main physical phenomenon in a satellite communication system that makes the design different from that of a terrestrial mobile system. For a bent pipe satellite network, the following delays are relevant.

One-way delay: from the base station 50 to the UE 25 via the satellite 30, or the other way around
Round-trip delay: from the base station 50 to the UE 25 via the satellite 30 and from the UE back to the base station 50 via the satellite 30.

Differential delay: the delay difference of two selected points in the same spotbeam 80.

Note that there may be additional delay between the ground base station antenna and base station 50, which may or may not be collocated. This delay depends on deployment. If the delay cannot be ignored, it should be taken into account in the communications system design. The propagation delay depends on the length of the signal path, which further depends on the elevation angles of the satellite 30 seen by the base station 50 and UE 25 on the ground. The minimum elevation angle is typically more than 10° for UE 25 and more than 5° for base station 50 on the ground. These values will be assumed in the delay analysis below.

The following Tables 1 and 2 are taken from 3GPP TR 38.811. We can see that the round-trip delay is much larger in satellite systems. For example, it is about 545 ms for a GEO satellite system. In contrast, the round-trip time is normally no more than 1 ms for typical terrestrial cellular networks.

**Table 1: Propagation delays for GEO satellite 30 at 35,786 km**

| | **GEO at 35786 km** | | |
|---|---|---|---|
| **Elevation angle** | **Path** | **D (km)** | **Time (ms)** |
| UE :10° | satellite 30 - UE | 40586 | 135.286 |
| GW : 5° | satellite 30 - gateway 40 | 41126.6 | 137.088 |
| 90° | satellite 30 - UE | 35786 | 119.286 |

| Bent Pipe satellite 30 | | | |
|---|---|---|---|
| One way delay | Gateway 40-satellite 3D_UE | 81712.6 | 272.375 |
| Round trip Time | Twice | 163425.3 | 544.751 |

| Regenerative Satellite 30 | | | |
|---|---|---|---|
| One way delay | Satellite 30 -UE | 40586 | 135.286 |
| Round Trip Time | Satellite 30-UE-Satellite 30 | 81172 | 270.572 |

**Table 2: Propagation delays for Non-geostationary (NGSO) satellites**

| | | **LEO at 600 km** | | **LEO at 1500 km** | | **MEO at 10000 km** | |
|---|---|---|---|---|---|---|---|
| **Elevation angle** | **Path** | **Distance D (km)** | **Delay (ms)** | **Distance D (km)** | **Delay (ms)** | **Distance D (km)** | **Delay (ms)** |
| UE: 10° | satellite 30 **-** UE | 1932.24 | 6,440 | 3647.5 | 12,158 | 14018.16 | 46.727 |
| GW: 5° | satellite 30 - gateway 40 | 2329.01 | 7.763 | 4101.6 | 13.672 | 14539.4 | 48.464 |
| 90° | satellite 30 - UE | 600 | 2 | 1500 | 5 | 10000 | 33.333 |
| Bent pipe satellite 30 | | | | | | | |
| One way delay | Gateway 40-satellite 30 UE | 4261.2 | 14.204 | 7749.2 | 25.83 | 28557.6 | 95.192 |
| Round Trip Delay | Twice | 8522.5 | 28.408 | 15498.4 | 51.661 | 57115.2 | 190.38 |
| Regenerative satellite 30 | | | | | | | |
| One way delay | Satellite 30 -UE | 1932.24 | 6.44 | 3647.5 | 12.16 | 14018.16 | 46.73 |
| Round Trip Delay | Satellite 30-UE-Satellite 30 | 3864.48 | 12.88 | 7295 | 24.32 | 28036.32 | 93.45 |

Generally, within spot beam 80 covering one cell, the delay can be divided into a common delay component and a differential delay component. The common delay is the same for all UEs 25 in the cell and is determined with respect to a reference point in the spot beam 80. In contrast, the differential delay is different for different UEs 25 which depends on the propagation delay between the reference point and the point at which a given UE 25 is positioned within the spot beam 80.

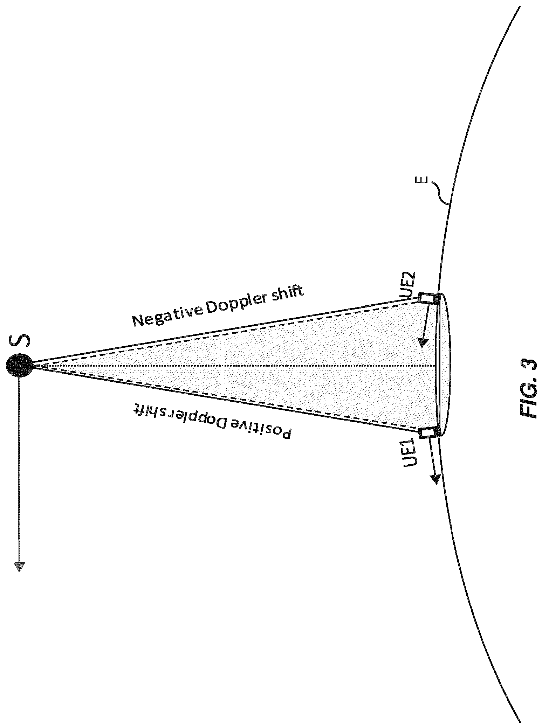

The Doppler shift problem is illustrated in Figure 3. Two UEs 25, denoted respectively a UE1 and UE2, are served by the same satellite, denoted S. The satellite S is moving in an orbit around earth E. The UEs 25 are also moving, due to rotation of the earthy and possibly also due to movement relative to the earth surface. Due to the movement of the satellite S, the distance between satellite S and UE1 will decrease, resulting in a positive Doppler shift. At the same time, the distance between S and UE2 will increase, resulting in a negative Doppler shift.

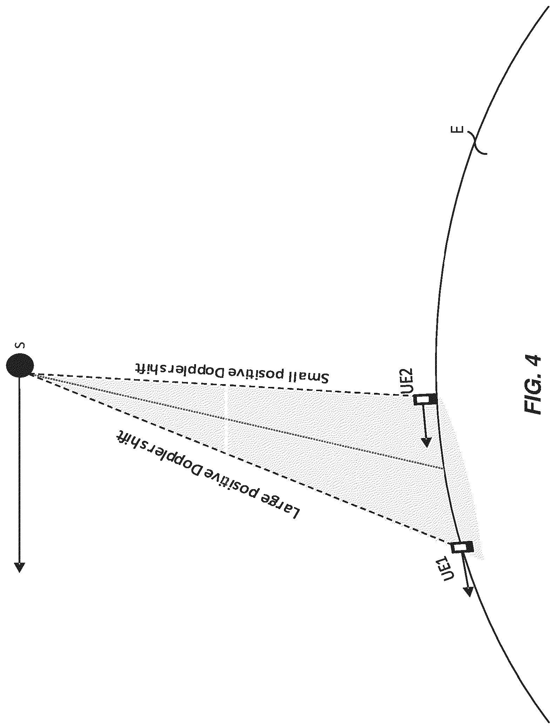

The differential shift problem is shown in Figure 4. In this example, the spotbeam 80 is directed towards the forward direction of the satellite 30. UE1 experiences a large positive Doppler shift while UE2 experiences a small positive Doppler shift. Pre-compensation of the DL TX frequency can be applied in this case such that the received signal, e.g., at the center of the spotbeam 80 appears to have zero Doppler shift. However, UE1 and UE2 will still experience different residual Doppler shifts and the problem remains. One problem with some existing solutions is that the received carrier frequency is used as a frequency reference, without taking Doppler shift into account.

The differential delay is mainly due to the different path lengths of the service links, since the feeder link is normally the same for UEs 25 in the same spotbeam 80. Further, the differential delay is mainly determined by the size of the spotbeam 80. It may range from sub-millisecond (for spotbeam 80 on the order of tens of kilometers) to tens of millisecond (for spotbeam 80 on the order of thousands of kilometers).

### Doppler Effects

Doppler is another major physical phenomenon that needs to be properly taken into account in a satellite communication system. The following Doppler effects are particularly relevant.

Doppler shift: the shift of the signal frequency due to the motion of the transmitter, the receiver, or both.

Doppler variation rate: the derivative of the Doppler shift as a function of time, i.e., it characterizes how fast the Doppler shift evolves over time.

Doppler effects depend on the relative speed of the satellites and the UE 25 and the carrier frequency.

For GEO satellites, they are fixed in principle and thus do not induce Doppler shift. In reality, however, they move around their nominal orbital positions due to for example perturbations. A GEO satellite 30 is typically maintained inside a box.
+/- 37.5 km in both latitude and longitude directions corresponding to an aperture angle of +/- 0.05°
+/- 17.5 km in the equatorial plane

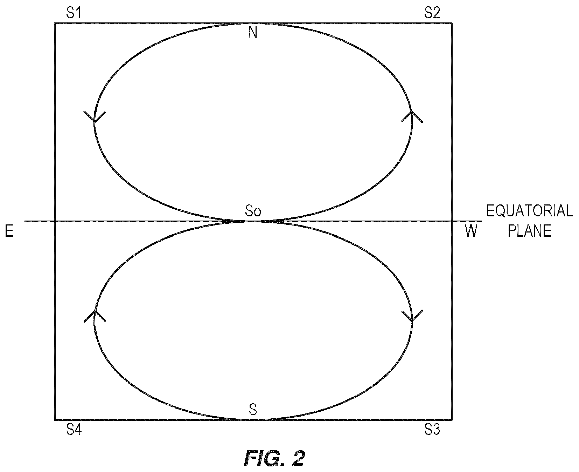

The trajectory of the GEO satellite 30 typically follows is a figure "8" pattern, as illustrated in Figure 2.

Table 3 gives example Doppler shifts of GEO satellites. For a GEO satellite 30 maintained inside the box and moving according to the figure "8" pattern, we can see that the Doppler shifts due to the GEO satellite movement are negligible.

If a GEO satellite 30 is not maintained inside the box, the motion could be near GEO orbit with inclination up to 6°. The Doppler shifts due to the GEO satellite movement may not be negligible.

**Table 3: Example Doppler shifts of GEO satellites**

| | **Frequency** | **2 GHz** | **20 GHz** | **30 GHz** |
|---|---|---|---|---|
| S2 to S1 | Doppler shift (Hz) | -0.25 | -2.4 | -4.0 |
| S1 to S4 | Doppler shift (Hz) | 2.25 | 22.5 | 34 |
| Not maintained inside the box (with inclination up to 6°) | Doppler shift (Hz) | 300 | 3000 | 4500 |

The Doppler effects become remarkable for MEO and LEO satellites. Table 4 gives example Doppler shifts and rates of non-geostationary (NGSO) satellites. We can see that the Doppler shifts and rates due to the NGSO satellite movement should be properly considered in the communications system design.

**Table 4: Doppler shifts and variation rates of NGSO satellites**

| **Frequency (GHz)** | **Max Doppler** | **Relative Doppler** | **Max Doppler shift variation** | |
|---|---|---|---|---|
| 2 | +/- 48 kHz | 0.0024 % | - 544 Hz/s | LEO at 600 km altitude |
| 20 | +/- 480 kHz | 0.0024 % | -5.44 kHz/s | |
| 30 | +/- 720 kHz | 0.0024 % | -8.16 kHz/s | |
| 2 | +/- 40 kHz | 0.002 % | -180 Hz/s | LEO at 1500 km altitude |
| 20 | +/- 400 kHz | 0.002 % | -1.8 kHZ/s | |
| 30 | +/- 600 kHz | 0.002 % | -2.7 kHz/s | |
| 2 | +/- 15 kHz | 0.00075 % | -6 Hz/s | MEO at 10000 km altitude |
| 20 | +/- 150 kHz | 0.00075 % | -60 Hz/s | |
| 30 | +/- 225 kHz | 0.00075 % | -90 Hz/s | |

### 3GPP study item (SI) on NTN

In RAN#80, a new SI "Solutions for NR to support Non-Terrestrial Networks" was agreed. It is a continuation of a preceding SI "NR to support Non-Terrestrial Networks" (RP-171450), where the objective was to study the NTN channel model, to define deployment scenarios and parameters, and to identify the key potential impacts on NR. The results are reflected in TR 38.811. The objectives of the current SI are to evaluate solutions for the identified key impacts from the preceding SI and to study impacts on RAN protocols/architecture.

### Frequency adjustment in LTE and NR

An LTE/NR UE 25 utilizes the broadcast synchronization sequences (e.g., primary synchronization sequence (PSS) and secondary synchronization sequence (SSS)) to estimate the downlink (DL) frequency from a base station 50. The estimated frequency is used as a reference, based on which it adjusts its local oscillator that determines both DL (receive) and UL (transmit) frequency.

### Pre/post compensation

To deal with large Doppler shift in LEO/MEO satellite communication systems, pre-compensation (i.e., an offset of the TX frequency) can be applied to the signal in the DL such that the DL signal received at a reference point in the spotbeam 80 (e.g., the center of a spotbeam 80) appears to have zero Doppler shift from the satellite movement relative to the reference point. With pre-compensation, only residual Doppler shift appears in the DL signal received at the other locations in the spotbeam 80.

Similarly, post-compensation (i.e., an offset of the RX frequency) can be applied to the signal in the UL such that the UL signal transmitted from a reference point in the spotbeam 80 (e.g., the center of a spotbeam 80) appears zero Doppler shift at the NW side. With post-compensation, only residual Doppler shift appears in the UL signal transmitted from the other locations in the spotbeam 80.

With pre-compensation in the DL, the carrier frequency the UE 25 is locked to after synchronization would be off by the corresponding residual Doppler shift. Such residual Doppler shift in the DL would further translate to the corresponding residual Doppler shift in the UL. With different residual Doppler shifts in the signals from different UEs 25 in the UL, the orthogonality of OFDMA/SC-FDMA would be significantly impacted.

### TA maintenance in NR

The network sends timing advance (TA) commands to a UE 25 in connected mode to maintain uplink timing. There are 6 bits in the MAC-CE for indicating an index *T_{A}* where *T_{A}* ∈ {0,1, ...,63} to the UE. The UE 25 calculates the new TA value *N_{TA_new}* using *N_{TA_new} = N_{TA_old} +* (*T_{A}* - 31) × 16 × 64 × 2^{-*µ*} (in units of *T_{c}* where *T_{c}* = 0.509 *ns*), where 15.2*^{µ}* kHz is the subcarrier spacing (SCS) and *µ* ∈ {0,1,2,3}. This allows a maximum change in the TA value of 32 × 16 × 64 × 2⁻*^{µ} T_{c}* which is shown in the following table. To cope with a large timing drift, e.g., 40 *µs*/*s,* several such commands per second are required.

**Table 5: Maximum change in TA value in connected mode for various SCS**

| SCS | 15 kHz | 30 kHz | 60 kHz | 120 kHz |
|---|---|---|---|---|
| Max. change in TA | 16.67 *µs* | 8.33 *µs* | 4.16 *µs* | 2.08 *µs* |

Relying solely on TA update commands to deal with timing drift will lead to excessive signaling overhead. Due to this reason, there is a need to empower the UE 25 to adjust its uplink timing amid large propagation delays and timing drift. It has been argued that different UEs 25 in a cell typically experience similar timing drift, which motivates broadcasting drift information for the UEs. We would like to point that this may not always be an efficient approach. For example, in certain LEO scenarios, different UEs 25 may experience different timing drift at a given time.

### Timing Advance Group

A Timing Advance Group (TAG) is a group of serving cells configured by Radio Resource Control (RRC) that uses the same timing reference and the same Timing Advance values. When a timing advance is sent in a MAC CE, the timing advance of all the serving cells in a TAG will be adjusted.

The embodiments below provide techniques to dynamically and jointly adjust the local frequency reference so that the DL synchronization is maintained in the presence of frequency drift together with adjusting the timing so that the UL synchronization is maintained in the presence of timing drift. If pre/post-compensations are used, the Doppler shift referred in the embodiments below refer to residual Doppler shift. If compensations are not used, the Doppler shift referred in the embodiments below refer to actual Doppler shift.

Similar to timing advance (TA), we use frequency offset (FO) or frequency advance (FA) to refer to the compensation made to correct for frequency shift.

### Configurable MAC-CE design for TA/FA commands or timing/frequency drift update

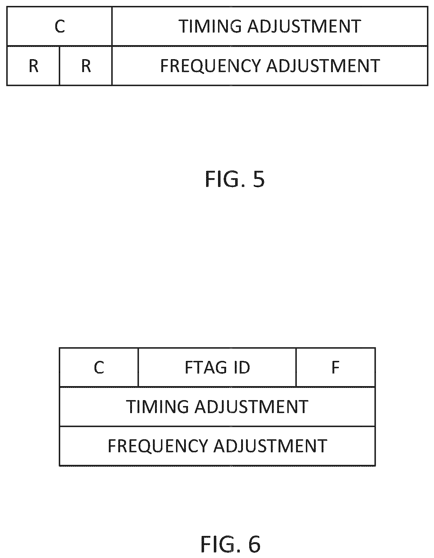

A MAC-CE is designed to include both TA and FA updates as shown in Figures 5 and 6.. This also enables redesigning the TA adjustment part of the MAC CE. For example, the TA adjustment step does not have to be evenly spaced, but can include larger shifts and smaller shifts. Whether both TA and FA commands, or only TA or FA command, is included is indicated by C fields of the MAC CE body. For example, if two C bits are used, the values 00, 01, 10 respectively indicate i) both TA and FA commands, ii) only TA command, or iii) only FA command to be present.

### Example:

The timing and frequency adjustment MAC CE is identified by a MAC subheader with LCID as specified in Table 6.2.1-2 (in TS38.821). The MAC CE for timing adjustment and frequency adjustment, shown in Figure 5, has a flexible size and consists of two octets with information elements (IEs) as defined below:
C: This field indicates whether a timing adjustment command, frequency adjustment command, or both are included in this MAC CE. If C is 00 only timing adjustment command is present and length is one octet, If C is 01 only frequency adjustment command is present and length is one octet, If C is 10 both timing and frequency adjustment commands are present and length is two octets.

Timing adjustment: This field indicates the timing adjustment.

Frequency adjustment: This field indicates the frequency adjustment.

R indicates reserved fields and are set to 0.

In one variant, the MAC CE includes S fields. The S fields are used to indicate the type of the adjustment. For example, if there are X bits indicating the exact adjustment command, the field of S bits could indicate which of the RRC configured sets of adjustment commands the MAC CE is pointing to. In the above example in Figure 5, the R fields could be used as S fields.

In another embodiment, in addition to, or instead of TA and/or FA, the MAC CE can have field(s) for indicating information related to timing/frequency drift. With this information, the UE 25 can self-adjust its timing or frequency while it waits for new TA/FA commands.

The following two sections provide examples of the possible RRC configuration options.

### Configurable MAC-CE field size for TA/FA and timing/frequency drift

The TA/FA ranges required in different satellite 30 scenarios may be very different. One possibility is to have a fixed size that covers the worst-case scenario. Another possibility is to make the field sizes configurable based on the scenario. In another embodiment, the S field of the MAC CE is used to indicate a preconfigured command set from a group of one or more preconfigured command sets. The command sets can be preconfigured by Radio Resource Control (RRC). The timing adjustment field and/or frequency field may provide an index to indicate an adjustment command from the preconfigured command set indicated by the S field. The UE can use the provided indices to select adjustment command(s) from the preconfigured command set indicated by the S field.

Further, yet another option is to have common time/frequency adjustment field in the MAC CE. In this case, the S field points to a RRC-configured state that indicates both timing drift and frequency drift.

For the GEO case, large range needs to be supported compared to LEO case. Similarly, such distinctions can be made based on other parameters such as satellite altitude, cell size and/or minimum elevation angle that the system supports.

In one embodiment, the configuration (e.g., granularity) of the TA/FA fields in MAC-CE is indicated by the network in system information.

### Action upon reception of MAC CE

A timer for the combined frequency and timing adjustment is introduced, that could, for example, be named *timeFreqAlignmentTimer.* Expiration this timer triggers the UE 25 to release any resources that requires strict timing and the UE 25 must perform random access to regain uplink synchronization. This timer can, for instance be configured to start if both the frequency and timing is updated, or when either one of the timing or frequency is updated.

In another embodiment, the concept of TAGs is extended to include frequency adjustments, which can be called Frequency and Timing Advance Groups (abbreviated FTAG). When a FA/TA MAC CE is sent, the FTAG will change its timing and frequency. With the introduction of the FTAG, and exemplary MAC CE could be as shown in Figure 6.

In another embodiment, the timers are not renamed but the existing time alignment timer has updated description to take into account frequency sync.

### Timing correction with DCI or DCI & MAC CE

In this embodiment, the network may use DCI signaling to update the valid timing drift for the UE. The information may be related to the actual timing drift and/or the differential timing (delta on the previous drift) drift and/or the rate of change of timing drift. This information can be hard-coded in DCI codepoints or RRC configured.

For signaling timing adjustment and/or frequency adjustment and/or the timing drift and/or frequency drift in DCI, one or more of the following embodiments can be used.

**Option 1:** A DCI format with CRC scrambled by a new RNTI is used. The new RNTI is used to indicate that this DCI format signals timing adjustment and/or frequency adjustment and/or the timing drift and/or frequency drift. The DCI format with CRC scrambled by the new RNTI can be considered either as a new DCI format or an existing DCI format with fields redefined. The size of the DCI format with CRC scrambled by the new RNTI is matched to the size of at least one of the existing DCI formats. A value of the new RNTI can be used by one or more UEs. In other words, the RNTI could be UE specific (one RNTI value used by one UE), group specific (one RNTI value used by a group of UEs), and cell specific (one RNTI value used by all UEs 25 in a cell).

**Option 2:** DCI format 0_0 or DCI format 1_0 with CRC scrambled by an existing RNTI is used to signal timing adjustment and/or frequency adjustment and/or the timing drift and/or frequency drift by using one or more of the reserved bits. For example, the information is piggybacked by using one or more of the reserved bits (16 bits) in the DCI format 1_0 with CRC scrambled by RA-RNTI. A UE 25 can get the signaled information when it monitors DCI 1_0 with CRC scrambled by RA-RNTI. As another example, the information is piggybacked by using one or more of the reserved bits (10 bits) in the DCI format 1_0 with CRC scrambled by C-RNTI and the "Frequency domain resource assignment" field being of all ones (i.e., PDCCH ordered random access). Whether the reserved bits are used to signal the piggybacked information is determined based on RRC configuration. If RRC configures so, how many of the reserved bits are used to signal the information can be hard coded or RRC configured.

**Option 3:** An existing DCI format (e.g. DCI format 0_1 or DCI format 1_1 or DCI format 2_0/2_1/2_2/2_3) with an existing RNTI is used to signal timing adjustment and/or frequency adjustment and/or the timing drift and/or frequency drift. The presence and length(s) of the field(s) are determined based on RRC configuration.

### TA/FA in MSG3 and MAC-CE for MSG3

In NTN random access, a UE 25 may be required to indicate the timing and/or frequency adjustment that the UE 25 applied for MSG1 transmission. In one embodiment, the network uses SI to broadcast whether a UE 25 needs to report in MSG3 only timing advance, only frequency advance or both timing advance and frequency advance that it had applied when transmitting MSG1.

The timing advance and/or frequency advance can be reported by UE 25 sending the MAC CE described above with command values know both to the network and UE. That is, potentially fixed values for the time/frequency advance.

For example, consider the GEO scenario where differential delay in a cell is very large but Doppler shift is very small. In this case, the network may require the UE 25 to only send the timing correction in MSG3. In contrast, consider LEO cell where both differential delay and differential Doppler are large. In this case, the network may require the UE 25 to send both timing advance and frequency advance that it applied for MSG1 transmission.

A UE 25 may need to report the applied timing or frequency correction in MSG3. One aspect of the present disclosure is that the network can indicate whether only TA or only FA or both are needed in MSG3. Further, the MSG3 can be sent using a MAC CE as described above.

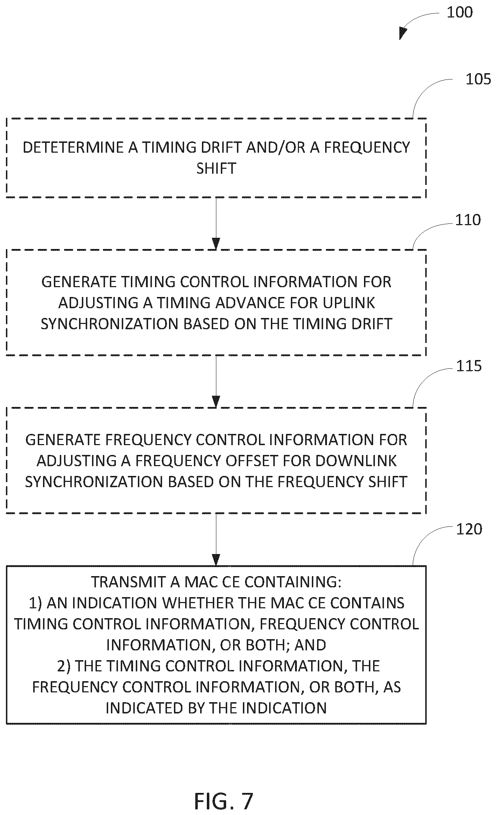

Figures 7 - 19 illustrate various methods performed by a network node (e.g., base station 50) and UE 25 for maintaining timing and/or frequency synchronization. The following descriptions refer to timing control information and frequency control information. Timing control information comprises information that is used to synchronize timing for uplink transmissions between the UE 25 and network node. In some embodiments, the timing control information may comprise a timing advance (TA) for synchronization of UL transmissions, or other timing adjustment command. The TA may comprise an absolute TA indicative of the total timing drift, or a relative TA indicative of the timing drift relative to the current TA used by the UE 25. In other embodiments, the timing control information may comprise an indication of the timing drift, so that the UE 25 can make a timing adjustment. Frequency control information comprises information that is used to synchronize frequency for downlink and/or uplink transmissions between the UE 25 and network node. The frequency control information may comprise a frequency offset (FO) ((also referred to as the frequency advance (FA)) for downlink synchronization, or other frequency adjustment command. The FO may comprise an absolute value of the FO indicative of the total frequency shift, or a relative FO indicative of the frequency shift relative to the current FO used by the UE 25. In other embodiments, the frequency control information may comprise an indication of the frequency shift, so that the UE 25 can make a frequency adjustment.

Figure 7 illustrates an exemplary method 100 performed by a network node (e.g. base station 50) in the NTN 10 of signaling timing control information and/or frequency control information for maintaining synchronization between the network node and UE 25. The network node optionally determines a timing drift and/or a frequency shift for a UE 25 (block 105). The network node optionally generates timing control information for adjusting a timing advance for uplink synchronization based on the timing drift (block 110). The network node optionally generates frequency control information for adjusting a frequency offset for downlink synchronization based on the frequency shift (block 115). The network node transmits to the UE 25 a MAC CE (block 120). The MAC CE contains 1) an indication whether the MAC CE contains timing control information for adjusting a timing advance for uplink synchronization, frequency control information for adjusting a frequency offset for downlink synchronization, or both, and 2) the timing control information, frequency control information, or both as indicated by the indication.

In some embodiments of the method 100, the MAC CE contains both timing control information and frequency control information.

In some embodiments of the method 100, the timing control information comprises a selection field containing a selection parameter for selecting a preconfigured command set from a group of one or more preconfigured command sets and an index field containing an index for selecting, from a selected one of the preconfigured command sets, an adjustment command for adjusting a timing advance to maintain uplink synchronization.

In some embodiments of the method 100, the frequency control information comprises a selection field containing a selection parameter for selecting a preconfigured command set from a group of one or more preconfigured command sets and an index field containing an index for selecting, from a selected one of the preconfigured command sets, a frequency offset to maintain downlink synchronization.

In some embodiments of the method 100, the MAC CE comprises a single selection field containing the selection parameter for selecting the preconfigured command set from a group of one or more preconfigured command sets, a first index field containing the index for selecting the adjustment command for adjusting the timing advance to maintain uplink synchronization from the selected one of the preconfigured command sets and a second index field containing the index for selecting the frequency offset to maintain downlink synchronization from the selected one of the preconfigured command sets.

Some embodiments of the method 100 further comprise sending Radio Resource Control (RRC) configuration information to the UE to configure the preconfigured command sets.

In some embodiments of the method 100, the timing control information and frequency control information is provided by a common time/frequency adjustment field containing an indication of a state based on the timing drift and frequency shift. A timing advance for maintaining uplink synchronization, a frequency offset for maintaining downlink synchronization, or both, is adjusted based on the indicated state.

In some embodiments of the method 100, the timing advance is adjusted by determining a timing drift based on the indicated state and adjusting the timing advance to compensate for the timing drift.

In some embodiments of the method 100, the frequency offset is adjusted by determining a frequency shift based on the indicated state and adjusting the frequency offset to compensate for the timing drift.

Some embodiments of the method 100 further comprise transmitting system information (SI) to the UE, the SI including an indication to report a timing advance, a frequency offset, or both, used for random access preamble transmission; receiving a random access preamble transmitted by a UE on a physical random access channel (PRACH); sending, to the UE, a random access response responsive to receipt of the random access preamble; and receiving, from the UE, a connection request including a timing advance, a frequency offset, or both, according to the indication.

In some embodiments of the method 100, the timing control information comprises one of a detected timing drift or a timing adjustment command correcting for timing drift.

In some embodiments of the method 100, the frequency control information comprises one of a detected frequency shift or a frequency adjustment command correcting for frequency shift.

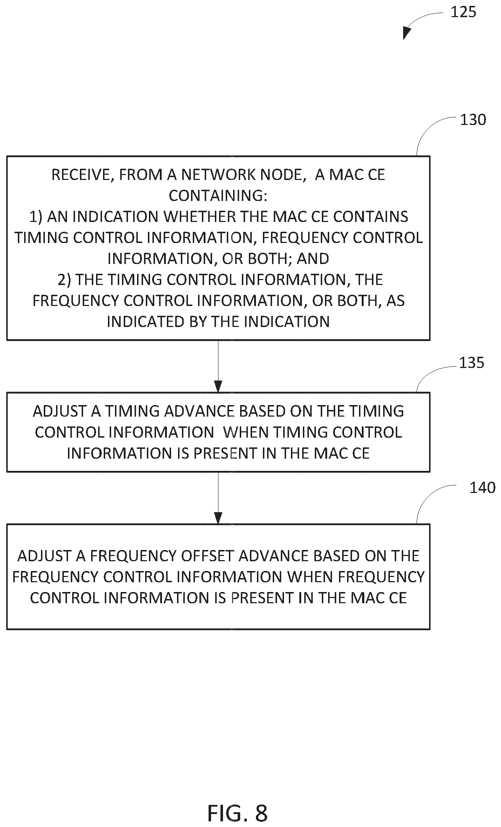

Figure 8 illustrates a complementary method 125 performed by a UE 25 in the NTN 10 of maintaining synchronization with a network node (e.g., base station 50). The UE 25 receives a MAC CE from the network node (block 130). The MAC CE contains an indication whether the MAC CE contains timing control information for adjusting a timing advance for uplink synchronization, frequency control information for adjusting a frequency offset for downlink synchronization, or both, and 2) the timing control information, frequency control information, or both as indicated by the indication. When the MAC CE contains timing control information, the UE 25 adjusts a timing advance based on the timing control information in the MAC CE (block 135). When the MAC CE contains frequency control information, the UE 25 further adjusts a frequency offset based on the frequency control information in the MAC CE (block 140).

In some embodiments of the method 125, the MAC CE contains both timing control information and frequency control information.

In some embodiments of the method 125, the timing control information comprises a selection field containing a selection parameter for selecting a preconfigured command set from a group of one or more preconfigured command sets and an index field containing an index for selecting, from a selected one of the preconfigured command sets, an adjustment command for adjusting a timing advance to maintain uplink synchronization.

In some embodiments of the method 125, the frequency control information comprises a selection field containing a selection parameter for selecting a preconfigured command set from a group of one or more preconfigured command sets and an index field containing an index for selecting, from a selected one of the preconfigured command sets, a frequency offset to maintain downlink synchronization.

Some embodiments of the method 125 further comprise a single selection field containing the selection parameter for selecting the preconfigured command set from a group of one or more preconfigured command sets, a first index field containing the index for selecting the adjustment command for adjusting the timing advance to maintain uplink synchronization from the selected one of preconfigured command sets and a second index field containing the index for selecting the frequency offset to maintain downlink synchronization from the selected one of the preconfigured command sets.

Some embodiments of the method 125 further comprise receiving Radio Resource Control (RRC) configuration information from the network node for configuring the preconfigured command sets.

In some embodiments of the method 125, the timing control information and frequency control information is provided by a common time/frequency adjustment field containing an indication of a state based on the timing drift and frequency shift. A timing advance for maintaining uplink synchronization, a frequency offset for maintaining downlink synchronization, or both, is adjusted based on the indicated state.

In some embodiments of the method 125, the timing advance is adjusted by determining a timing drift based on the indicated state and adjusting the timing advance to compensate for the timing drift.

In some embodiments of the method 125, the frequency offset is adjusted by determining a frequency shift based on the indicated state and adjusting the frequency offset to compensate for the timing drift.

Some embodiments of the method 125 further comprise receiving, from a network node, SI including an indication to report a timing advance, a frequency offset, or both, used for random access preamble transmission; transmitting a random access preamble to initiate a connection with the network node; receiving, from the network node responsive to the random access preamble, a random access response; and transmitting, to the network node, a connection request including the timing advance, the frequency offset, or both, according to the indication.

In some embodiments of the method 125, the timing control information comprises one of a detected timing drift or a timing adjustment command correcting for timing drift.

In some embodiments of the method 125, the frequency control information comprises one of a detected frequency shift or a frequency adjustment command correcting for frequency shift.

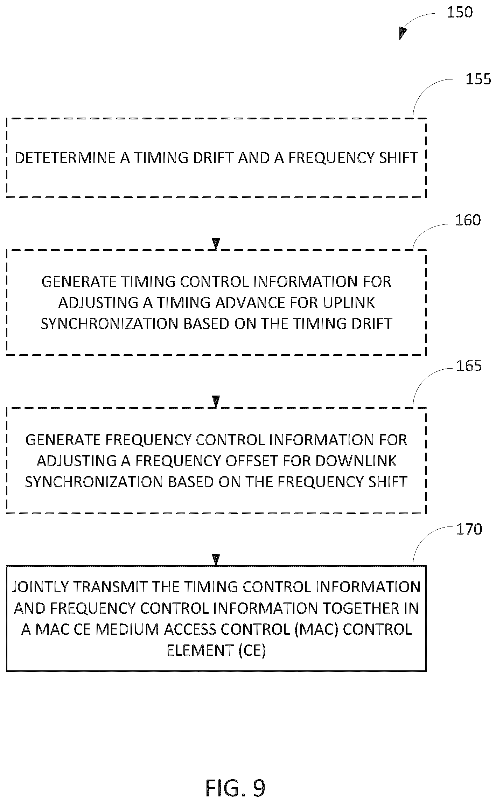

Figure 9 illustrates an exemplary method 150 performed by a network node (e.g. base station 50) in the NTN 10 of signaling timing control information and frequency control information for maintaining synchronization between the network node and UE 25. The network node optionally determines a timing drift and a frequency shift for a UE 25 (block 155). The network node optionally generates timing control information for adjusting a timing advance for uplink synchronization based on the timing drift (block 160). The network node optionally generates frequency control information for adjusting a frequency offset for downlink synchronization based on the frequency shift (block 165). The network node jointly transmits the timing control information and frequency control information together in a MAC CE (block 170).

In some embodiments of the method 150, the timing control information comprises one of a detected timing drift or a timing adjustment command correcting for timing drift.

In some embodiments of the method 150, the frequency control information comprises one of a detected frequency shift or a frequency adjustment command correcting for frequency shift.

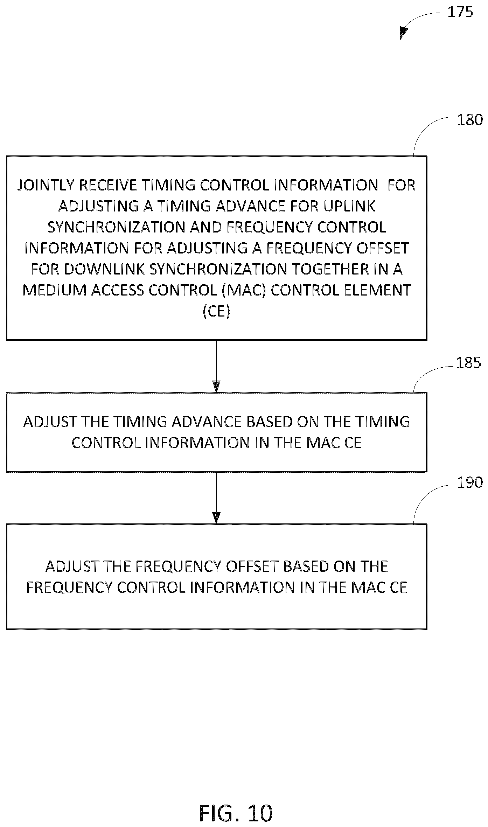

Figure 10 illustrates a complementary method 175 performed by a UE 25 in the NTN 10 of maintaining synchronization with a network node (e.g.., base station 50) timing control information and frequency control information for maintaining synchronization between the network node and UE 25. The UE 25 jointly receives, from a network node, timing control information for adjusting a timing advance for uplink synchronization and frequency control information for adjusting a frequency offset for downlink synchronization together in a MAC CE (block 180). The UE 25 adjusts the timing advance for uplink transmissions based on the timing control information in the MAC CE (block 185). The UE 25 further adjusts the frequency offset for downlink synchronization based on the frequency control information in the MAC CE (block 190).

In some embodiments of the method 175, the timing control information comprises one of a detected timing drift or a timing adjustment command correcting for timing drift.

In some embodiments of the method 175, the frequency control information comprises one of a detected frequency shift or a frequency adjustment command correcting for frequency shift.

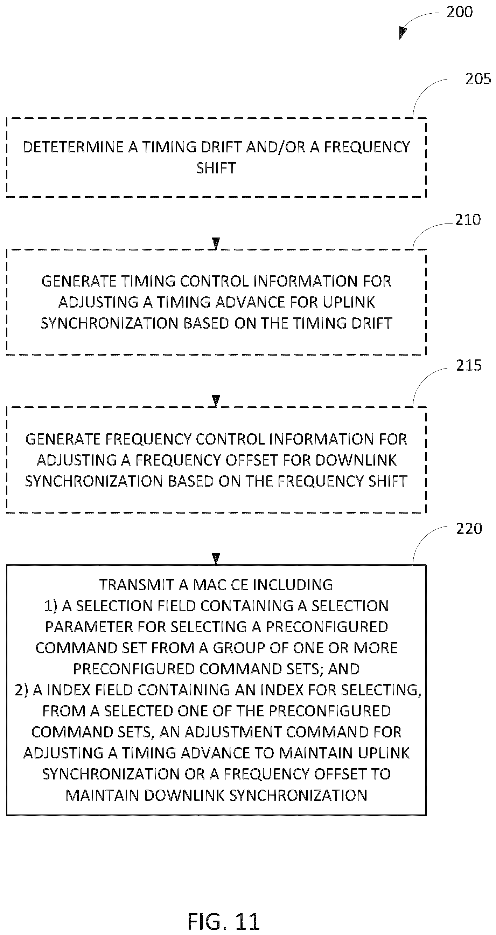

Figure 11 illustrates an exemplary method 200 performed by a network node (e.g. base station 50) in the NTN 10 of signaling timing control information and frequency control information for maintaining synchronization between the network node and UE 25. The network node optionally determines a timing drift and/or a frequency shift for a UE 25 (block 205). The network node optionally generates timing control information for adjusting a timing advance for uplink synchronization based on the timing drift (block 210). The network node also optionally generates frequency control information for adjusting a frequency offset for downlink synchronization based on the frequency shift (block 215). The network node transmits to the UE 25 a MAC CE including a selection field containing a selection parameter for selecting a preconfigured command set from a group of one or more preconfigured command sets, and a command index field containing an index for selecting, from a selected one of the preconfigured command sets, an adjustment command for adjusting a timing advance to maintain uplink synchronization or a frequency offset to maintain downlink synchronization (block 220).

In some embodiments of the method 200, the MAC CE contains two index fields containing respectively a first index for selecting a timing adjustment command from the selected one of the preconfigured command sets and a second index for selecting a frequency adjustment command from the selected one of the preconfigured command sets.

Some embodiments of the method 200 further comprise transmitting Radio Resource Control (RRC) configuration information from the network node for configuring the preconfigured command sets.

In some embodiments of the method 200, the timing control information comprises one of a detected timing drift or a timing adjustment command correcting for timing drift.

In some embodiments of the method 200, the frequency control information comprises one of a detected frequency shift or a frequency adjustment command correcting for frequency shift.

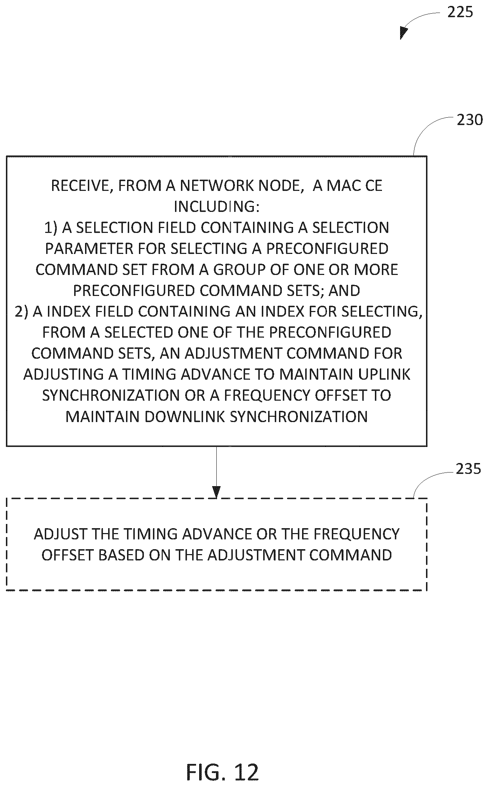

Figure 12 illustrates a complementary method 225 performed by a UE 25 in the NTN 10 of maintaining synchronization with a network node (e.g.., base station 50. The UE 25 receives a MAC CE from the network node (block 230). The MAC CE includes a selection field containing a selection parameter for selecting a preconfigured command set from a group of one or more preconfigured command sets, and a command index field containing an index for selecting, from a selected one of the preconfigured command sets, an adjustment command for adjusting a timing advance to maintain uplink synchronization or a frequency offset to maintain downlink synchronization. The UE 25 adjusts the timing advance or frequency offset based on the adjustment command (block 235).

In some embodiments of the method 225, the MAC CE contains two index fields containing respectively a first index for selecting a timing adjustment command from the selected one of the preconfigured command sets and a second index for selecting a frequency adjustment command from the selected one of the preconfigured command sets.

Some embodiments of the method 225 further comprise receiving Radio Resource Control (RRC) configuration information from the network node for configuring the preconfigured command sets.

In some embodiments of the method 225, the timing control information comprises one of a detected timing drift or a timing adjustment command correcting for timing drift.

In some embodiments of the method 225, the frequency control information comprises one of a detected frequency shift or a frequency adjustment command correcting for frequency shift.

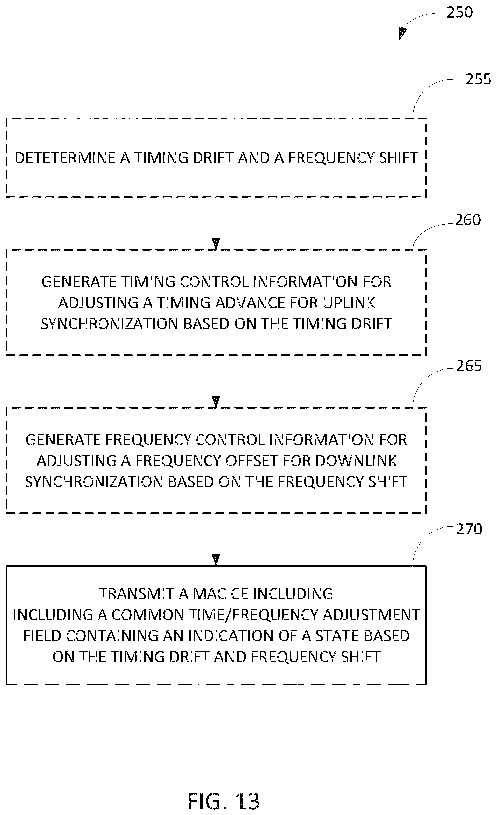

Figure 13 illustrates an exemplary method 250 performed by a network node (e.g. base station 50) in the NTN 10 of signaling timing control information and frequency control information for maintaining synchronization between the network node and UE 25. The network node optionally determines a timing drift and a frequency shift for a UE 25 (block 255). The network node optionally generates timing control information for adjusting a timing advance for uplink synchronization based on the timing drift (block 260). The network node also optionally generates frequency control information for adjusting a frequency offset for downlink synchronization based on the frequency shift (block 265). The network node transmits to the UE 25 a MAC CE including a common time/frequency adjustment field containing an indication of a state based on the timing drift and frequency shift (block 270). The UE 25 can use the indication of state to determine the timing drift and/or frequency shift.

In some embodiments of the method 250, the timing control information comprises one of a detected timing drift or a timing adjustment command correcting for timing drift.

In some embodiments of the method 250, the frequency control information comprises one of a detected frequency shift or a frequency adjustment command correcting for frequency shift.

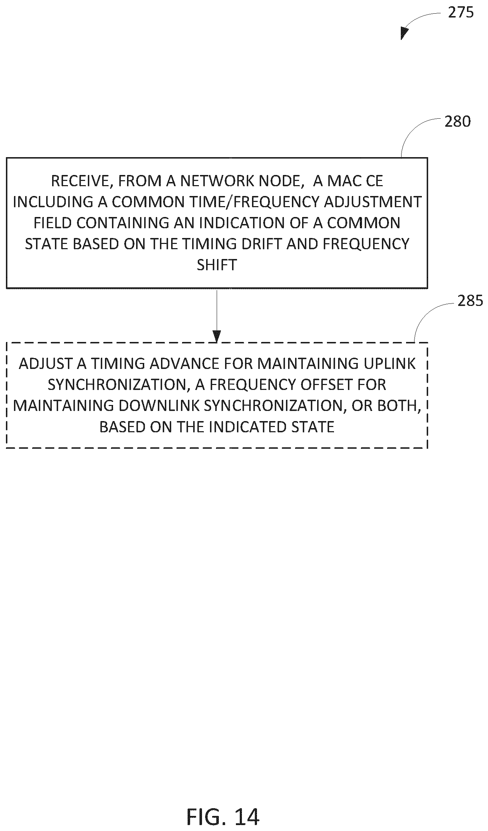

Figure 14 illustrates a complementary method 275 performed by a UE 25 in the NTN 10 of maintaining synchronization with a network node (e.g.., base station 50). The UE 25 receives from a network node (e.g., base station 50) a MAC CE including a common time/frequency adjustment field containing an indication of a state based on the timing drift and frequency shift (block 280). The UE 25 adjusts a timing advance for maintaining uplink synchronization, a frequency offset for maintaining downlink synchronization, or both, based on the indicated state (block 285).

In some embodiments of the method 275, the UE 25 determines a timing drift based on the indicated state and adjusts the timing advance to compensate for the timing drift.

In some embodiments of the method 275, the UE 25 determines a frequency shift based on the indicated state and adjusts the frequency offset to compensate for the frequency shift.

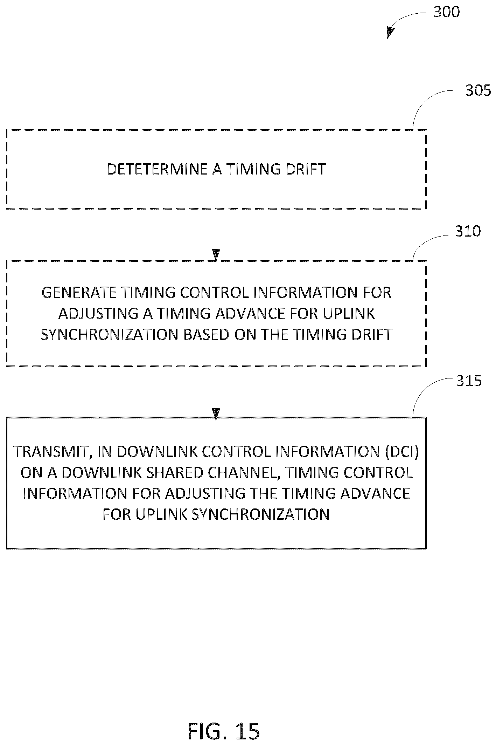

Figure 15 illustrates an exemplary method 300 performed by a network node (e.g. base station 50) in the NTN 10 of signaling timing control information and frequency control information for maintaining synchronization between the network node and UE 25. The network node optionally determines a timing drift for a UE 25 (block 305). The network node optionally generates timing control information for adjusting a timing advance for uplink synchronization based on the timing drift (block 310). The network node transmits to the UE 25, in DCI on a downlink shared channel (e.g., DPCCH), timing control information for adjusting the timing advance to maintain uplink synchronization (block 315).

In some embodiments of the method 300, the timing control information comprises one of a detected timing drift or a timing adjustment command correcting for timing drift.

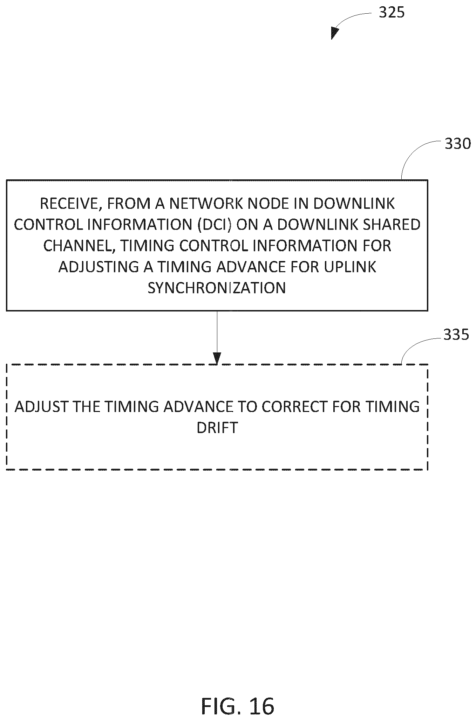

Figure 16 illustrates a complementary method 325 performed by a UE 25 in the NTN 10 of maintaining synchronization with a network node (e.g.., base station 50). The UE 25 receives, from a network node (e.g., base station 50), timing control information for adjusting a timing advance for uplink synchronization in downlink control information (DCI) on a downlink shared channel (block 330). The UE 25 adjusts the timing based on the timing control information in the received DCI (block 335).

In some embodiments of the method 325, the timing control information comprises one of a detected timing drift or a timing adjustment command correcting for timing drift.

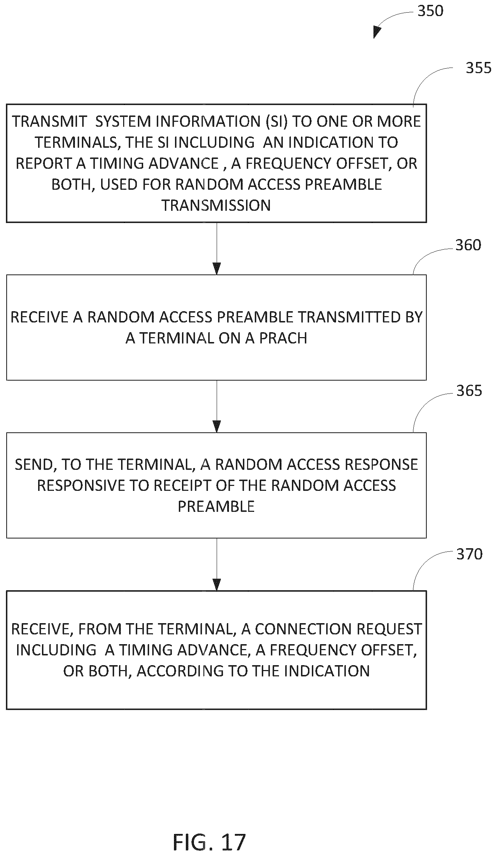

Figure 17 illustrates an exemplary method 350 performed by a network node (e.g. base station 50) in the NTN 10 of signaling timing control information and frequency control information for maintaining synchronization between the network node and UE 25. The network node transmits system information (SI) to one or more UEs 25, the SI including an indication to report a timing advance, a frequency offset, or both, used for random access preamble transmission (block 355). The network node subsequently receives a random access preamble transmitted by a UE 25 on a PRACH (block 360). The network node sends, to the UE 25 responsive to receipt of the random access preamble, a random access response (block 365). The network node further receives, from the UE 25, a connection request, also referred to as Message 3 (MSG3), including a timing advance, a frequency offset, or both, according to the indication (block 370).

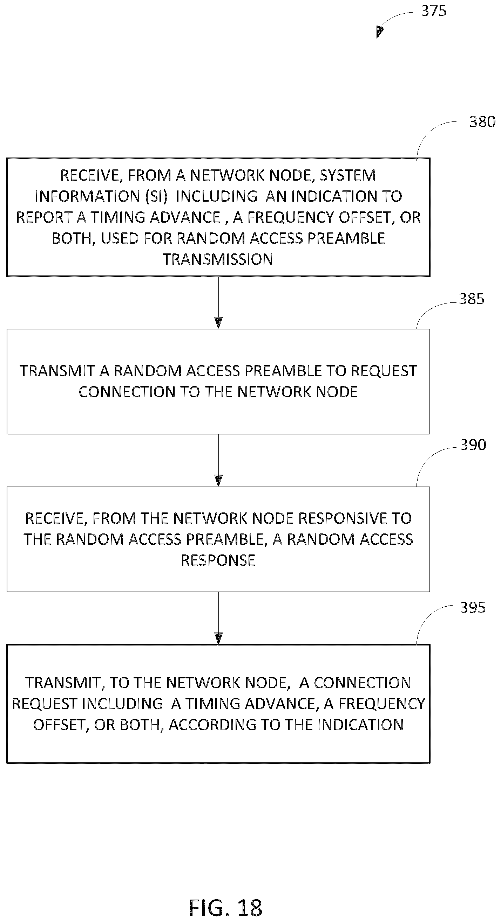

Figure 18 illustrates a complementary method 375 performed by a UE 25 in the NTN 10 of maintaining synchronization with a network node (e.g., base station 50). The UE 25 receives, from a network node, system information (SI) including an indication to report a timing advance, a frequency offset, or both, used for random access preamble transmission (block 380). The UE 25 transmits a random access preamble to initiate a connection with the network node (block 385). The UE 25 further receives, from the network node responsive to the random access preamble, a random access response (block 390). The UE 25 further transmits, to the network node, a connection request including a timing advance, a frequency offset, or both, according to the indication (block 395).

An apparatus can perform any of the methods herein described by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

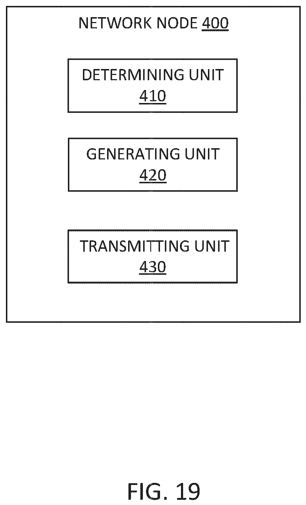

Figure 19 illustrates an exemplary network node for a non-terrestrial network, indicated generally by the numeral 400, according to an embodiment. The network node 400 comprises an optional determining unit 410, an optional generating unit 420 and a transmitting unit 430. The various units 410-430 may comprise one or more microprocessors, hardware circuits, firmware or a combination thereof. The determining unit 410, when present, is configured to determine a timing drift, a frequency shift, or both, for a UE 25 served by the network node 400. The generating unit 420, when present, is configured to generate timing control information for adjusting a timing advance for uplink synchronization based on the timing drift, frequency control information for adjusting a frequency offset for downlink synchronization based on the frequency shift, or both. In one embodiment, the transmitting unit 430 is configured to transmit, to the UE 25 a MAC CE containing 1) an indication whether the MAC CE contains timing control information for adjusting a timing advance for uplink synchronization, frequency control information for adjusting a frequency offset for downlink synchronization, or both and 2) the timing control information and/or frequency control information in a MAC CE as indicating by the indication.

In another embodiment, the transmitting unit 430 is configured to jointly transmit the timing control information and frequency control information together in a MAC CE.

In still another embodiment, the transmitting unit 430 is configured to transmit to the UE 25 a MAC CE including a selection field containing a selection parameter for selecting a preconfigured command set from a group of one or more preconfigured command sets, and a command index field containing an index for selecting, from a selected one of the preconfigured command sets, an adjustment command for adjusting a timing advance to maintain uplink synchronization or a frequency offset to maintain downlink synchronization

In another embodiment, the transmitting unit 430 is configured to transmit to the UE 25 a MAC CE including a common time/frequency adjustment field containing an indication of a state based on the timing drift and frequency shift.

In another embodiment, the transmitting unit 430 is configured to transmit to the UE 25, in DCI on a downlink shared channel (e.g., DPCCH), timing control information for adjusting a timing advance to maintain uplink synchronization.

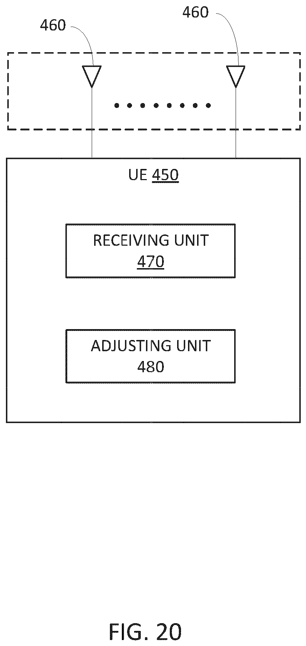

Figure 20 illustrates an exemplary UE 450 according to an embodiment. The UE 450 comprises one or more antennas 460 for communicating over a wireless communication channel, a receiving unit 470 and an adjusting unit 480. The various units 470-480 may comprise one or more microprocessors, hardware circuits, firmware or a combination thereof. The receiving unit 470 according to one embodiment is configured to receive a MAC CE containing 1) an indication whether the MAC CE contains timing control information for adjusting a timing advance for uplink synchronization, frequency control information for adjusting a frequency offset for downlink synchronization, or both and 2) the timing control information and/or frequency control information from the network node. The adjusting unit 480 according to this embodiment is configured to adjust the timing advance for uplink transmissions based on the timing control information when the MAC CE contains timing control information and to adjust the frequency offset for downlink synchronization based on the frequency control information when the MAC CE contains frequency control information.

The receiving unit 470 according to another embodiment is configured to jointly receive, from a network node, timing control information for adjusting a timing advance for uplink synchronization and frequency control information for adjusting a frequency offset for downlink synchronization together in a medium access control (MAC) control element (CE). The adjusting unit 480 according to this embodiment is configured to adjust the timing advance for uplink transmissions based on the timing control information in the MAC CE and to adjust the frequency offset for downlink synchronization based on the frequency control information in the MAC CE.

The receiving unit 470 according to still embodiment is configured to receive a MAC CE from the network node in a downlink transmission. The MAC CE includes a selection field containing a selection parameter for selecting a preconfigured command set from a group of one or more preconfigured command sets, and a command index field containing an index for selecting, from a selected one of the preconfigured command sets, an adjustment command for adjusting a timing advance to maintain uplink synchronization or a frequency offset to maintain downlink synchronization. The adjusting unit 480 according to this embodiment is configured to adjusts the timing advance or frequency offset based on the adjustment command.

The receiving unit 470 according to another embodiment is configured to receive from a network node (e.g., base station 50) a MAC CE including a common time/frequency adjustment field containing an indication of a state based on the timing drift and frequency shift. The adjusting unit 480 according to this embodiment is configured to adjust a timing advance for maintaining uplink synchronization, a frequency offset for maintaining downlink synchronization, or both, based on the indicated state.

The receiving unit 470 according to yet another embodiment is configured to receive, from a network node (e.g., base station 50), timing control information for adjusting a timing advance for uplink synchronization in downlink control information (DCI) on a downlink shared channel. The adjusting unit 480 according to this embodiment is configured to adjust the timing based on the timing control information in the received DCI.

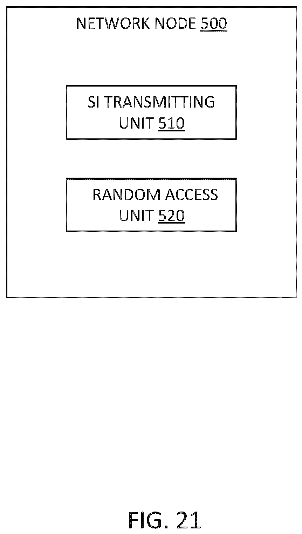

Figure 21 illustrates an exemplary network node 500 according to another embodiment. The network node 500 comprises a system information (SI) transmitting unit 510, and a random access unit 520. The various units 510-520 may comprise one or more microprocessors, hardware circuits, firmware or a combination thereof. The SI transmitting unit 510 is configured to transmit SI to one or more UEs 25. The SI includes an indication to report a timing advance, a frequency offset, or both, used for random access preamble transmission. The random access unit 520 is configured to receive a random access preamble transmitted by a UE 25 on a PRACH, to send to the UE 25 responsive to receipt of the random access preamble a random access response, and to receive from the UE 25 a connection request including a timing advance, a frequency offset, or both, according to the indication.

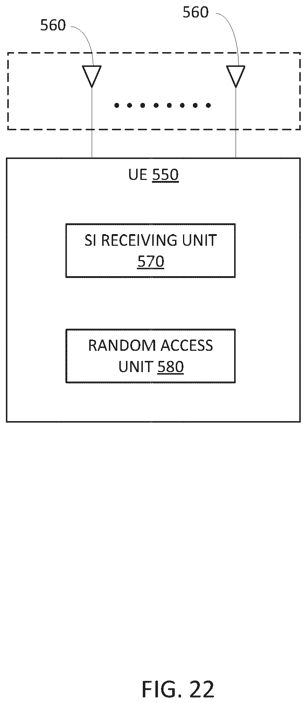

Figure 22 illustrates an exemplary UE 550 according to another embodiment. The UE 550 comprises one or more antennas 560 for communicating over a wireless channel, a system information (SI) receiving unit 570, and a random access unit 580. The various units 570-580 may comprise one or more microprocessors, hardware circuits, firmware or a combination thereof. The SI receiving unit 570 is configured to receive, from a network node, SI including an indication to report a timing advance, a frequency offset, or both, used for random access preamble transmission. The random access unit 580 is configured to transmit a random access preamble to initiate a connection with the network node, receive from the network node responsive to the random access preamble a random access response, and transmit to the network node a connection request including a timing advance, a frequency offset, or both, according to the indication.

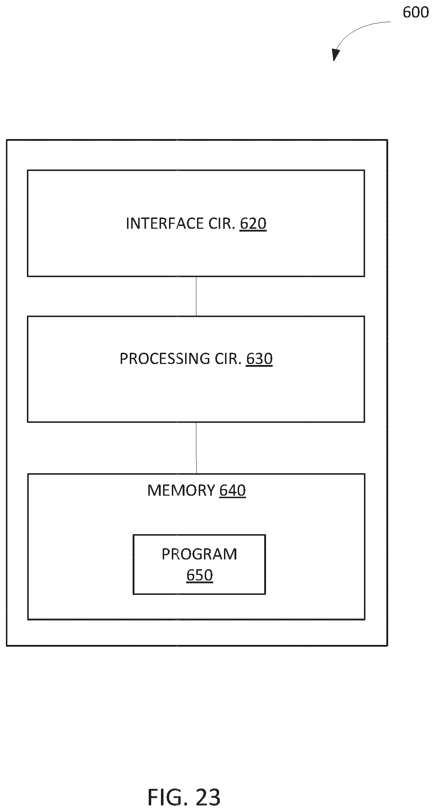

Figure 23 illustrates an exemplary network node 600 configured to perform the methods as herein described. The network node 600 comprises interface circuit 620, processing circuitry 630, and memory 640. The interface circuit 620 comprises circuitry for connecting to the core network 20 and communicating with other network nodes in the NTN 10 over wired or wireless links. In some embodiments, the interface circuit 620 may include a wireless transceiver for communication with satellites in the 30 in the NTN 10. The processing circuitry 630 controls the overall operation of the network node 600 and is configured to perform the methods as herein described. The processing circuitry 630 may comprise one or more microprocessors, hardware, firmware, or a combination thereof. Memory 640 comprises both volatile and non-volatile memory for storing computer program code and data needed by the processing circuitry 630 for operation. Memory 640 may comprise any tangible, non-transitory computer-readable storage medium for storing data including electronic, magnetic, optical, electromagnetic, or semiconductor data storage. Memory 640 stores a computer program 650 comprising executable instructions that configure the processing circuitry 630 to implement one or more of the methods 100, 150, 200, 250, 300 and 350 according to Figures 7, 9, 11, 13, 15 and 17 respectively. A computer program 650 in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 650 for configuring the processing circuitry 630 as herein described may be stored in a removable memory, such as a portable compact disc, portable digital video disc, or other removable media. The computer program 650 may also be embodied in a carrier such as an electronic signal, optical signal, radio signal, or computer readable storage medium.

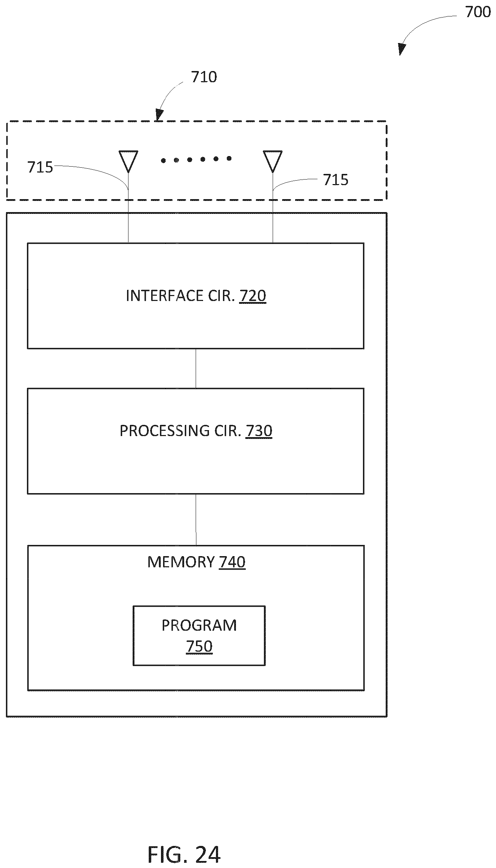

Figure 24 illustrates an exemplary UE 700 according to an embodiment. The UE 700 comprises an antenna array 710 with multiple antenna elements 715, an interface circuit 720, a processing circuitry 730, and memory 740. The interface circuit 720 is coupled to the antennas 715 and comprises the radio frequency (RF) circuitry 722 needed for transmitting signals to and receiving signals from satellites 30 or terrestrial base stations in the NTN 10. In one embodiment, the interface comprises a RF transceiver including a transmitter and receiver configured to operate according to the NR or LTE standard.

The processing circuitry 730 controls the overall operation of the radio node 700 and is configured to perform the methods as herein described. The processing circuitry 730 may comprise one or more microprocessors, hardware, firmware, or a combination thereof. Memory 740 comprises both volatile and non-volatile memory for storing computer program code and data needed by the processing circuitry 730 for operation. Memory 740 may comprise any tangible, non-transitory computer-readable storage medium for storing data including electronic, magnetic, optical, electromagnetic, or semiconductor data storage. Memory 740 stores a computer program 750 comprising executable instructions that configure the processing circuitry 730 to implement one or more of the methods 125, 175, 225, 275, 325, 375 according to Figures 8, 10, 12, 14, 16 and 18 respectively. A computer program 750 in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 750 for configuring the processing circuitry 730 as herein described may be stored in a removable memory, such as a portable compact disc, portable digital video disc, or other removable media. The computer program 750 may also be embodied in a carrier such as an electronic signal, optical signal, radio signal, or computer readable storage medium.

Those skilled in the art will also appreciate that embodiments herein further include corresponding computer programs. A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

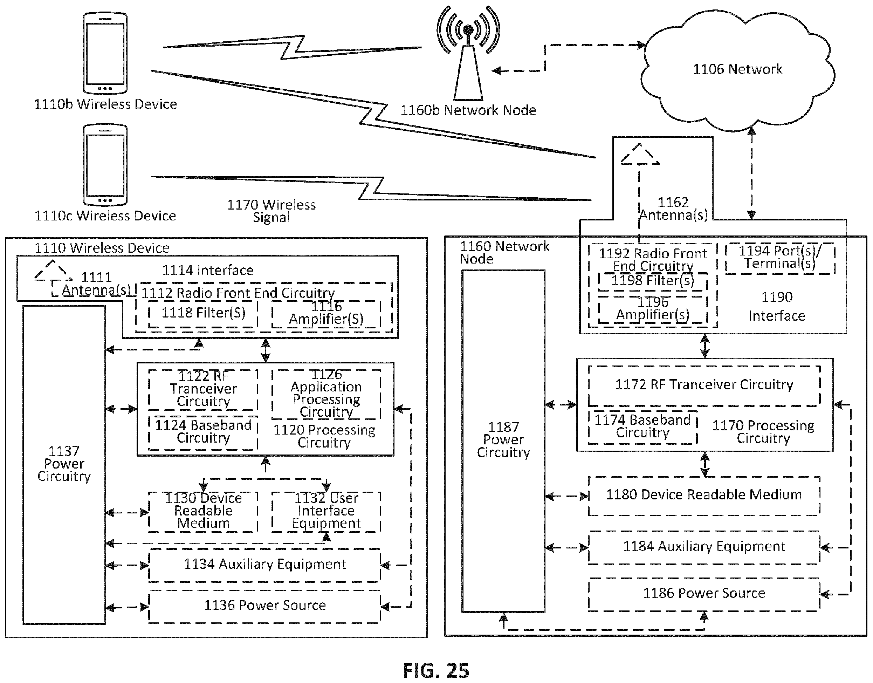

Although the subject matter described herein may be implemented in any appropriate type of system using any suitable components, the embodiments disclosed herein are described in relation to a wireless network, such as the example wireless network illustrated in Figure 25. For simplicity, the wireless network of Figure 25 only depicts network 1106, network nodes 1160 and 1160b, and WDs 1110, 1110b, and 1110c. In practice, a wireless network may further include any additional elements suitable to support communication between wireless devices or between a wireless device and another communication device, such as a landline telephone, a service provider, or any other network node or end device. Of the illustrated components, network node 1160 and wireless device (WD) 1110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-loT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1160 and WD 1110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 25, network node 1160 includes processing circuitry 1170, device readable medium 1180, interface 1190, auxiliary equipment 1184, power source 1186, power circuitry 1187, and antenna 1162. Although network node 1160 illustrated in the example wireless network of Figure 25 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1160 are depicted as single boxes located within a larger box, or nested within multiple boxes, in practice, a network node may comprise multiple different physical components that make up a single illustrated component (e.g., device readable medium 1180 may comprise multiple separate hard drives as well as multiple RAM modules).

Similarly, network node 1160 may be composed of multiple physically separate components (e.g., a NodeB component and a RNC component, or a BTS component and a BSC component, etc.), which may each have their own respective components. In certain scenarios in which network node 1160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1160 may be configured to support multiple radio access technologies (RATs). In such embodiments, some components may be duplicated (e.g., separate device readable medium 1180 for the different RATs) and some components may be reused (e.g., the same antenna 1162 may be shared by the RATs). Network node 1160 may also include multiple sets of the various illustrated components for different wireless technologies integrated into network node 1160, such as, for example, GSM, WCDMA, LTE, NR, WiFi, or Bluetooth wireless technologies. These wireless technologies may be integrated into the same or different chip or set of chips and other components within network node 1160.

Processing circuitry 1170 is configured to perform any determining, calculating, or similar operations (e.g., certain obtaining operations) described herein as being provided by a network node. These operations performed by processing circuitry 1170 may include processing information obtained by processing circuitry 1170 by, for example, converting the obtained information into other information, comparing the obtained information or converted information to information stored in the network node, and/or performing one or more operations based on the obtained information or converted information, and as a result of said processing making a determination.

Processing circuitry 1170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1160 components, such as device readable medium 1180, network node 1160 functionality. For example, processing circuitry 1170 may execute instructions stored in device readable medium 1180 or in memory within processing circuitry 1170. Such functionality may include providing any of the various wireless features, functions, or benefits discussed herein. In some embodiments, processing circuitry 1170 may include a system on a chip (SOC).

In some embodiments, processing circuitry 1170 may include one or more of radio frequency (RF) transceiver circuitry 1172 and baseband processing circuitry 1174. In some embodiments, radio frequency (RF) transceiver circuitry 1172 and baseband processing circuitry 1174 may be on separate chips (or sets of chips), boards, or units, such as radio units and digital units. In alternative embodiments, part or all of RF transceiver circuitry 1172 and baseband processing circuitry 1174 may be on the same chip or set of chips, boards, or units

In certain embodiments, some or all of the functionality described herein as being provided by a network node, base station, eNB or other such network device may be performed by processing circuitry 1170 executing instructions stored on device readable medium 1180 or memory within processing circuitry 1170. In alternative embodiments, some or all of the functionality may be provided by processing circuitry 1170 without executing instructions stored on a separate or discrete device readable medium, such as in a hard-wired manner. In any of those embodiments, whether executing instructions stored on a device readable storage medium or not, processing circuitry 1170 can be configured to perform the described functionality. The benefits provided by such functionality are not limited to processing circuitry 1170 alone or to other components of network node 1160, but are enjoyed by network node 1160 as a whole, and/or by end users and the wireless network generally.

Device readable medium 1180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1170. Device readable medium 1180 may store any suitable instructions, data or information, including a computer program, software, an application including one or more of logic, rules, code, tables, etc. and/or other instructions capable of being executed by processing circuitry 1170 and, utilized by network node 1160. Device readable medium 1180 may be used to store any calculations made by processing circuitry 1170 and/or any data received via interface 1190. In some embodiments, processing circuitry 1170 and device readable medium 1180 may be considered to be integrated.

Interface 1190 is used in the wired or wireless communication of signaling and/or data between network node 1160, network 1106, and/or WDs 1110. As illustrated, interface 1190 comprises port(s)/terminal(s) 1194 to send and receive data, for example to and from network 1106 over a wired connection. Interface 1190 also includes radio front end circuitry 1192 that may be coupled to, or in certain embodiments a part of, antenna 1162. Radio front end circuitry 1192 comprises filters 1198 and amplifiers 1196. Radio front end circuitry 1192 may be connected to antenna 1162 and processing circuitry 1170. Radio front end circuitry may be configured to condition signals communicated between antenna 1162 and processing circuitry 1170. Radio front end circuitry 1192 may receive digital data that is to be sent out to other network nodes or WDs via a wireless connection. Radio front end circuitry 1192 may convert the digital data into a radio signal having the appropriate channel and bandwidth parameters using a combination of filters 1198 and/or amplifiers 1196. The radio signal may then be transmitted via antenna 1162. Similarly, when receiving data, antenna 1162 may collect radio signals which are then converted into digital data by radio front end circuitry 1192. The digital data may be passed to processing circuitry 1170. In other embodiments, the interface may comprise different components and/or different combinations of components.

In certain alternative embodiments, network node 1160 may not include separate radio front end circuitry 1192, instead, processing circuitry 1170 may comprise radio front end circuitry and may be connected to antenna 1162 without separate radio front end circuitry 1192. Similarly, in some embodiments, all or some of RF transceiver circuitry 1172 may be considered a part of interface 1190. In still other embodiments, interface 1190 may include one or more ports or terminals 1194, radio front end circuitry 1192, and RF transceiver circuitry 1172, as part of a radio unit (not shown), and interface 1190 may communicate with baseband processing circuitry 1174, which is part of a digital unit (not shown).

Antenna 1162 may include one or more antennas, or antenna arrays, configured to send and/or receive wireless signals. Antenna 1162 may be coupled to radio front end circuitry 1190 and may be any type of antenna capable of transmitting and receiving data and/or signals wirelessly. In some embodiments, antenna 1162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1162 may be separate from network node 1160 and may be connectable to network node 1160 through an interface or port.

Antenna 1162, interface 1190, and/or processing circuitry 1170 may be configured to perform any receiving operations and/or certain obtaining operations described herein as being performed by a network node. Any information, data and/or signals may be received from a wireless device, another network node and/or any other network equipment. Similarly, antenna 1162, interface 1190, and/or processing circuitry 1170 may be configured to perform any transmitting operations described herein as being performed by a network node. Any information, data and/or signals may be transmitted to a wireless device, another network node and/or any other network equipment.

Power circuitry 1187 may comprise, or be coupled to, power management circuitry and is configured to supply the components of network node 1160 with power for performing the functionality described herein. Power circuitry 1187 may receive power from power source 1186. Power source 1186 and/or power circuitry 1187 may be configured to provide power to the various components of network node 1160 in a form suitable for the respective components (e.g., at a voltage and current level needed for each respective component). Power source 1186 may either be included in, or external to, power circuitry 1187 and/or network node 1160. For example, network node 1160 may be connectable to an external power source (e.g., an electricity outlet) via an input circuitry or interface such as an electrical cable, whereby the external power source supplies power to power circuitry 1187. As a further example, power source 1186 may comprise a source of power in the form of a battery or battery pack which is connected to, or integrated in, power circuitry 1187. The battery may provide backup power should the external power source fail. Other types of power sources, such as photovoltaic devices, may also be used.

Alternative embodiments of network node 1160 may include additional components beyond those shown in Figure 25 that may be responsible for providing certain aspects of the network node's functionality, including any of the functionality described herein and/or any functionality necessary to support the subject matter described herein. For example, network node 1160 may include user interface equipment to allow input of information into network node 1160 and to allow output of information from network node 1160. This may allow a user to perform diagnostic, maintenance, repair, and other administrative functions for network node 1160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE 25 implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1110 includes antenna 1111, interface 1114, processing circuitry 1120, device readable medium 1130, user interface equipment 1132, auxiliary equipment 1134, power source 1136 and power circuitry 1137. WD 1110 may include multiple sets of one or more of the illustrated components for different wireless technologies supported by WD 1110, such as, for example, GSM, WCDMA, LTE, NR, WiFi, WiMAX, NB-IoT, or Bluetooth wireless technologies, just to mention a few. These wireless technologies may be integrated into the same or different chips or set of chips as other components within WD 1110.

Antenna 1111 may include one or more antennas or antenna arrays, configured to send and/or receive wireless signals, and is connected to interface 1114. In certain alternative embodiments, antenna 1111 may be separate from WD 1110 and be connectable to WD 1110 through an interface or port. Antenna 1111, interface 1114, and/or processing circuitry 1120 may be configured to perform any receiving or transmitting operations described herein as being performed by a WD. Any information, data and/or signals may be received from a network node and/or another WD. In some embodiments, radio front end circuitry and/or antenna 1111 may be considered an interface.

As illustrated, interface 1114 comprises radio front end circuitry 1112 and antenna 1111. Radio front end circuitry 1112 comprise one or more filters 1118 and amplifiers 1116. Radio front end circuitry 1114 is connected to antenna 1111 and processing circuitry 1120, and is configured to condition signals communicated between antenna 1111 and processing circuitry 1120. Radio front end circuitry 1112 may be coupled to or a part of antenna 1111. In some embodiments, WD 1110 may not include separate radio front end circuitry 1112; rather, processing circuitry 1120 may comprise radio front end circuitry and may be connected to antenna 1111. Similarly, in some embodiments, some or all of RF transceiver circuitry 1122 may be considered a part of interface 1114. Radio front end circuitry 1112 may receive digital data that is to be sent out to other network nodes or WDs via a wireless connection. Radio front end circuitry 1112 may convert the digital data into a radio signal having the appropriate channel and bandwidth parameters using a combination of filters 1118 and/or amplifiers 1116. The radio signal may then be transmitted via antenna 1111. Similarly, when receiving data, antenna 1111 may collect radio signals which are then converted into digital data by radio front end circuitry 1112. The digital data may be passed to processing circuitry 1120. In other embodiments, the interface may comprise different components and/or different combinations of components.

Processing circuitry 1120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1110 components, such as device readable medium 1130, WD 1110 functionality. Such functionality may include providing any of the various wireless features or benefits discussed herein. For example, processing circuitry 1120 may execute instructions stored in device readable medium 1130 or in memory within processing circuitry 1120 to provide the functionality disclosed herein.

As illustrated, processing circuitry 1120 includes one or more of RF transceiver circuitry 1122, baseband processing circuitry 1124, and application processing circuitry 1126. In other embodiments, the processing circuitry may comprise different components and/or different combinations of components. In certain embodiments processing circuitry 1120 of WD 1110 may comprise a SOC. In some embodiments, RF transceiver circuitry 1122, baseband processing circuitry 1124, and application processing circuitry 1126 may be on separate chips or sets of chips. In alternative embodiments, part or all of baseband processing circuitry 1124 and application processing circuitry 1126 may be combined into one chip or set of chips, and RF transceiver circuitry 1122 may be on a separate chip or set of chips. In still alternative embodiments, part or all of RF transceiver circuitry 1122 and baseband processing circuitry 1124 may be on the same chip or set of chips, and application processing circuitry 1126 may be on a separate chip or set of chips. In yet other alternative embodiments, part or all of RF transceiver circuitry 1122, baseband processing circuitry 1124, and application processing circuitry 1126 may be combined in the same chip or set of chips. In some embodiments, RF transceiver circuitry 1122 may be a part of interface 1114. RF transceiver circuitry 1122 may condition RF signals for processing circuitry 1120.

In certain embodiments, some or all of the functionality described herein as being performed by a WD may be provided by processing circuitry 1120 executing instructions stored on device readable medium 1130, which in certain embodiments may be a computer-readable storage medium. In alternative embodiments, some or all of the functionality may be provided by processing circuitry 1120 without executing instructions stored on a separate or discrete device readable storage medium, such as in a hard-wired manner. In any of those particular embodiments, whether executing instructions stored on a device readable storage medium or not, processing circuitry 1120 can be configured to perform the described functionality. The benefits provided by such functionality are not limited to processing circuitry 1120 alone or to other components of WD 1110, but are enjoyed by WD 1110 as a whole, and/or by end users and the wireless network generally.

Processing circuitry 1120 may be configured to perform any determining, calculating, or similar operations (e.g., certain obtaining operations) described herein as being performed by a WD. These operations, as performed by processing circuitry 1120, may include processing information obtained by processing circuitry 1120 by, for example, converting the obtained information into other information, comparing the obtained information or converted information to information stored by WD 1110, and/or performing one or more operations based on the obtained information or converted information, and as a result of said processing making a determination.

Device readable medium 1130 may be operable to store a computer program, software, an application including one or more of logic, rules, code, tables, etc. and/or other instructions capable of being executed by processing circuitry 1120. Device readable medium 1130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1120. In some embodiments, processing circuitry 1120 and device readable medium 1130 may be considered to be integrated.

User interface equipment 1132 may provide components that allow for a human user to interact with WD 1110. Such interaction may be of many forms, such as visual, audial, tactile, etc. User interface equipment 1132 may be operable to produce output to the user and to allow the user to provide input to WD 1110. The type of interaction may vary depending on the type of user interface equipment 1132 installed in WD 1110. For example, if WD 1110 is a smart phone, the interaction may be via a touch screen; if WD 1110 is a smart meter, the interaction may be through a screen that provides usage (e.g., the number of gallons used) or a speaker that provides an audible alert (e.g., if smoke is detected). User interface equipment 1132 may include input interfaces, devices and circuits, and output interfaces, devices and circuits. User interface equipment 1132 is configured to allow input of information into WD 1110, and is connected to processing circuitry 1120 to allow processing circuitry 1120 to process the input information. User interface equipment 1132 may include, for example, a microphone, a proximity or other sensor, keys/buttons, a touch display, one or more cameras, a USB port, or other input circuitry. User interface equipment 1132 is also configured to allow output of information from WD 1110, and to allow processing circuitry 1120 to output information from WD 1110. User interface equipment 1132 may include, for example, a speaker, a display, vibrating circuitry, a USB port, a headphone interface, or other output circuitry. Using one or more input and output interfaces, devices, and circuits, of user interface equipment 1132, WD 1110 may communicate with end users and/or the wireless network, and allow them to benefit from the functionality described herein.

Auxiliary equipment 1134 is operable to provide more specific functionality which may not be generally performed by WDs. This may comprise specialized sensors for doing measurements for various purposes, interfaces for additional types of communication such as wired communications etc. The inclusion and type of components of auxiliary equipment 1134 may vary depending on the embodiment and/or scenario.

Power source 1136 may, in some embodiments, be in the form of a battery or battery pack. Other types of power sources, such as an external power source (e.g., an electricity outlet), photovoltaic devices or power cells, may also be used. WD 1110 may further comprise power circuitry 1137 for delivering power from power source 1136 to the various parts of WD 1110 which need power from power source 1136 to carry out any functionality described or indicated herein. Power circuitry 1137 may in certain embodiments comprise power management circuitry. Power circuitry 1137 may additionally or alternatively be operable to receive power from an external power source; in which case WD 1110 may be connectable to the external power source (such as an electricity outlet) via input circuitry or an interface such as an electrical power cable. Power circuitry 1137 may also in certain embodiments be operable to deliver power from an external power source to power source 1136. This may be, for example, for the charging of power source 1136. Power circuitry 1137 may perform any formatting, converting, or other modification to the power from power source 1136 to make the power suitable for the respective components of WD 1110 to which power is supplied.

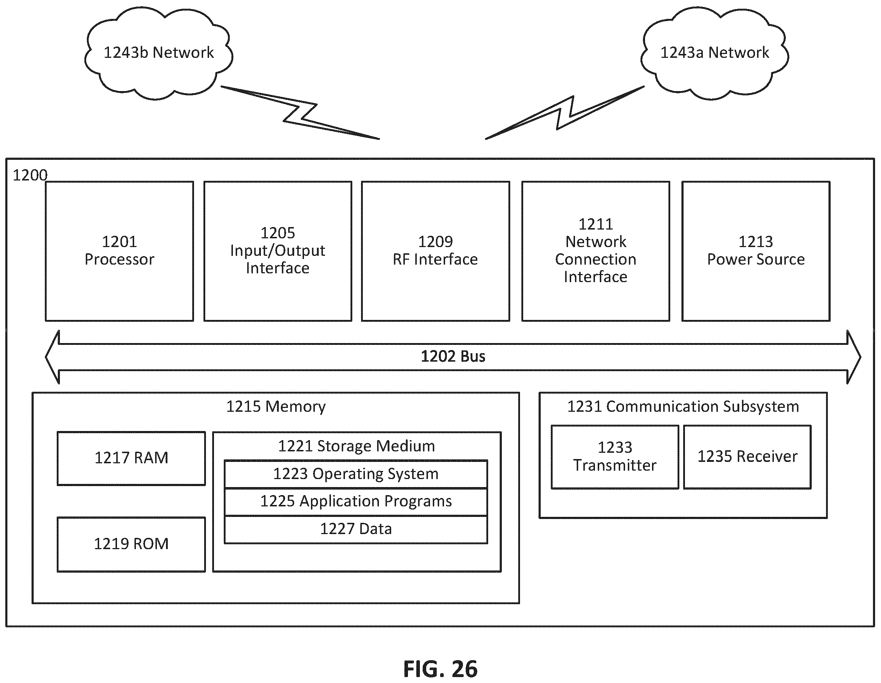

Figure 26 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 12200 may be any UE identified by the 3^{rd} Generation Partnership Project (3GPP), including a NB-loT UE, a machine type communication (MTC) UE, and/or an enhanced MTC (eMTC) UE. UE 1200, as illustrated in Figure 26, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 26 is a UE, the components discussed herein are equally applicable to a WD, and vice-versa.

In Figure 26, UE 1200 includes processing circuitry 1201 that is operatively coupled to input/output interface 1205, radio frequency (RF) interface 1209, network connection interface 1211, memory 1215 including random access memory (RAM) 1217, read-only memory (ROM) 1219, and storage medium 1221 or the like, communication subsystem 1231, power source 1233, and/or any other component, or any combination thereof. Storage medium 1221 includes operating system 1223, application program 1225, and data 1227. In other embodiments, storage medium 1221 may include other similar types of information. Certain UEs 25 may utilize all of the components shown in Figure 26, or only a subset of the components. The level of integration between the components may vary from one UE to another UE. Further, certain UEs 25 may contain multiple instances of a component, such as multiple processors, memories, transceivers, transmitters, receivers, etc.

In Figure 26, processing circuitry 1201 may be configured to process computer instructions and data. Processing circuitry 1201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1201 may include two central processing units (CPUs). Data may be information in a form suitable for use by a computer.

In the depicted embodiment, input/output interface 1205 may be configured to provide a communication interface to an input device, output device, or input and output device. UE 1200 may be configured to use an output device via input/output interface 1205. An output device may use the same type of interface port as an input device. For example, a USB port may be used to provide input to and output from UE 1200. The output device may be a speaker, a sound card, a video card, a display, a monitor, a printer, an actuator, an emitter, a smartcard, another output device, or any combination thereof. UE 1200 may be configured to use an input device via input/output interface 1205 to allow a user to capture information into UE 1200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 26, RF interface 1209 may be configured to provide a communication interface to RF components such as a transmitter, a receiver, and an antenna. Network connection interface 1211 may be configured to provide a communication interface to network 1243a. Network 1243a may encompass wired and/or wireless networks such as a local-area network (LAN), a wide-area network (WAN), a computer network, a wireless network, a telecommunications network, another like network or any combination thereof. For example, network 1243a may comprise a Wi-Fi network. Network connection interface 1211 may be configured to include a receiver and a transmitter interface used to communicate with one or more other devices over a non-terrestrial network according to one or more communication protocols, such as Ethernet, TCP/IP, SONET, ATM, or the like. Network connection interface 1211 may implement receiver and transmitter functionality appropriate to the communication network links (e.g., optical, electrical, and the like). The transmitter and receiver functions may share circuit components, software or firmware, or alternatively may be implemented separately.

RAM 1217 may be configured to interface via bus 1202 to processing circuitry 1201 to provide storage or caching of data or computer instructions during the execution of software programs such as the operating system, application programs, and device drivers. ROM 1219 may be configured to provide computer instructions or data to processing circuitry 1201. For example, ROM 1219 may be configured to store invariant low-level system code or data for basic system functions such as basic input and output (I/O), startup, or reception of keystrokes from a keyboard that are stored in a non-volatile memory. Storage medium 1221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1221 may be configured to include operating system 1223, application program 1225 such as a web browser application, a widget or gadget engine or another application, and data file 1227. Storage medium 1221 may store, for use by UE 1200, any of a variety of various operating systems or combinations of operating systems.

Storage medium 1221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1221 may allow UE 1200 to access computer-executable instructions, application programs or the like, stored on transitory or non-transitory memory media, to off-load data, or to upload data. An article of manufacture, such as one utilizing a communication system may be tangibly embodied in storage medium 1221, which may comprise a device readable medium.

In Figure 26, processing circuitry 1201 may be configured to communicate with network 1243b using communication subsystem 1231. Network 1243a and network 1243b may be the same network or networks or different network or networks. Communication subsystem 1231 may be configured to include one or more transceivers used to communicate with network 1243b. For example, communication subsystem 1231 may be configured to include one or more transceivers used to communicate with one or more remote transceivers of another device capable of wireless communication such as another WD, UE, or base station of a radio access network (RAN) according to one or more communication protocols, such as IEEE 802.26, CDMA, WCDMA, GSM, LTE, UTRAN, WiMax, or the like. Each transceiver may include transmitter 1233 and/or receiver 1235 to implement transmitter or receiver functionality, respectively, appropriate to the RAN links (e.g., frequency allocations and the like). Further, transmitter 1233 and receiver 1235 of each transceiver may share circuit components, software or firmware, or alternatively may be implemented separately.

In the illustrated embodiment, the communication functions of communication subsystem 1231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1231 may include cellular communication, Wi-Fi communication, Bluetooth communication, and GPS communication. Network 1243b may encompass wired and/or wireless networks such as a local-area network (LAN), a wide-area network (WAN), a computer network, a wireless network, a telecommunications network, another like network or any combination thereof. For example, network 1243b may be a cellular network, a Wi-Fi network, and/or a near-field network. Power source 1213 may be configured to provide alternating current (AC) or direct current (DC) power to components of UE 1200.

The features, benefits and/or functions described herein may be implemented in one of the components of UE 1200 or partitioned across multiple components of UE 1200. Further, the features, benefits, and/or functions described herein may be implemented in any combination of hardware, software or firmware. In one example, communication subsystem 1231 may be configured to include any of the components described herein. Further, processing circuitry 1201 may be configured to communicate with any of such components over bus 1202. In another example, any of such components may be represented by program instructions stored in memory that when executed by processing circuitry 1201 perform the corresponding functions described herein. In another example, the functionality of any of such components may be partitioned between processing circuitry 1201 and communication subsystem 1231. In another example, the non-computationally intensive functions of any of such components may be implemented in software or firmware and the computationally intensive functions may be implemented in hardware.

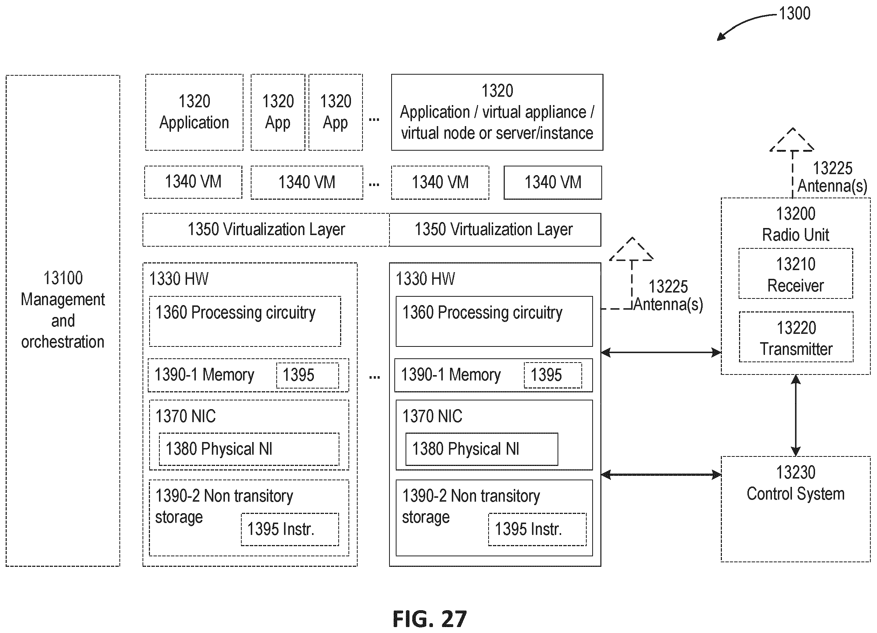

Figure 27 is a schematic block diagram illustrating a virtualization environment 1300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1300 hosted by one or more of hardware nodes 1330. Further, in embodiments in which the virtual node is not a radio access node or does not require radio connectivity (e.g., a core network node), then the network node may be entirely virtualized.

The functions may be implemented by one or more applications 1320 (which may alternatively be called software instances, virtual appliances, network functions, virtual nodes, virtual network functions, etc.) operative to implement some of the features, functions, and/or benefits of some of the embodiments disclosed herein. Applications 1320 are run in virtualization environment 1300 which provides hardware 1330 comprising processing circuitry 1360 and memory 1390. Memory 1390 contains instructions 1395 executable by processing circuitry 1360 whereby application 1320 is operative to provide one or more of the features, benefits, and/or functions disclosed herein.

Virtualization environment 1300, comprises general-purpose or special-purpose network hardware devices 1330 comprising a set of one or more processors or processing circuitry 1360, which may be commercial off-the-shelf (COTS) processors, dedicated Application Specific Integrated Circuits (ASICs), or any other type of processing circuitry including digital or analog hardware components or special purpose processors. Each hardware device may comprise memory 1390-1 which may be non-persistent memory for temporarily storing instructions 1395 or software executed by processing circuitry 1360. Each hardware device may comprise one or more network interface controllers (NICs) 1370, also known as network interface cards, which include physical network interface 1380. Each hardware device may also include non-transitory, persistent, machine-readable storage media 1390-2 having stored therein software 1395 and/or instructions executable by processing circuitry 1360. Software 1395 may include any type of software including software for instantiating one or more virtualization layers 1350 (also referred to as hypervisors), software to execute virtual machines 1340 as well as software allowing it to execute functions, features and/or benefits described in relation with some embodiments described herein.

Virtual machines 1340, comprise virtual processing, virtual memory, virtual networking or interface and virtual storage, and may be run by a corresponding virtualization layer 1350 or hypervisor. Different embodiments of the instance of virtual appliance 1320 may be implemented on one or more of virtual machines 1340, and the implementations may be made in different ways.

During operation, processing circuitry 1360 executes software 1395 to instantiate the hypervisor or virtualization layer 1350, which may sometimes be referred to as a virtual machine monitor (VMM). Virtualization layer 1350 may present a virtual operating platform that appears like networking hardware to virtual machine 1340.

As shown in Figure 27, hardware 1330 may be a standalone network node with generic or specific components. Hardware 1330 may comprise antenna 13225 and may implement some functions via virtualization. Alternatively, hardware 1330 may be part of a larger cluster of hardware (e.g. such as in a data center or customer premise equipment (CPE)) where many hardware nodes work together and are managed via management and orchestration (MANO) 13100, which, among others, oversees lifecycle management of applications 1320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1340 may be a software implementation of a physical machine that runs programs as if they were executing on a physical, non-virtualized machine. Each of virtual machines 1340, and that part of hardware 1330 that executes that virtual machine, be it hardware dedicated to that virtual machine and/or hardware shared by that virtual machine with others of the virtual machines 1340, forms a separate virtual network elements (VNE).

Still in the context of NFV, Virtual Network Function (VNF) is responsible for handling specific network functions that run in one or more virtual machines 1340 on top of hardware networking infrastructure 1330 and corresponds to application 1320 in Figure 27.

In some embodiments, one or more radio units 13200 that each include one or more transmitters 13220 and one or more receivers 13210 may be coupled to one or more antennas 13225. Radio units 13200 may communicate directly with hardware nodes 1330 via one or more appropriate network interfaces and may be used in combination with the virtual components to provide a virtual node with radio capabilities, such as a radio access node or a base station.

In some embodiments, some signalling can be effected with the use of control system 13230 which may alternatively be used for communication between the hardware nodes 1330 and radio units 13200.

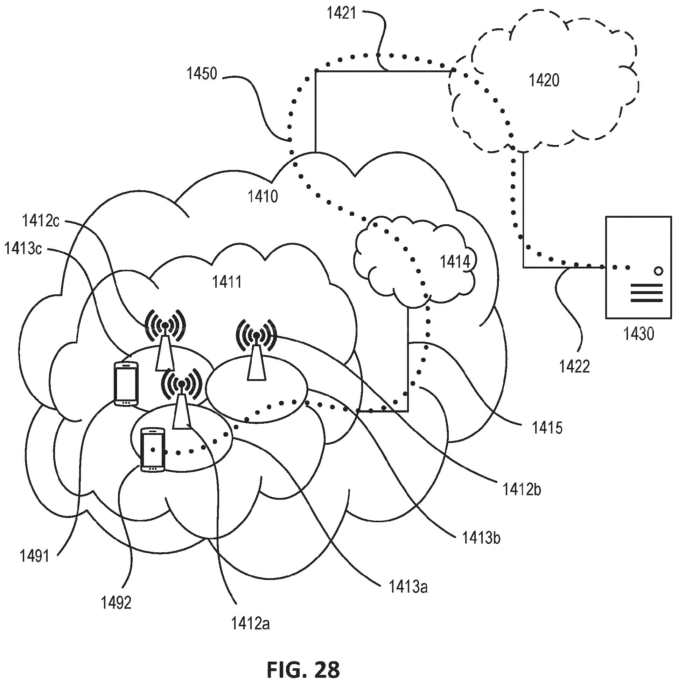

Figure 28 illustrates a telecommunication network connected via an intermediate network to a host computer in accordance with some embodiments. In particular, with reference to Figure 28, in accordance with an embodiment, a communication system includes telecommunication network 1410, such as a 3GPP-type cellular network, which comprises access network 1411, such as a radio access network, and core network 1414. Access network 1411 comprises a plurality of base stations 1412a, 1412b, 1412c, such as NBs, eNBs, gNBs or other types of wireless access points, each defining a corresponding coverage area 1413a, 1413b, 1413c. Each base station 1412a, 1412b, 1412c is connectable to core network 1414 over a wired or wireless connection 1415. A first UE 1491 located in coverage area 1413c is configured to wirelessly connect to, or be paged by, the corresponding base station 1412c. A second UE 1492 in coverage area 1413a is wirelessly connectable to the corresponding base station 1412a. While a plurality of UEs 1491, 1492 are illustrated in this example, the disclosed embodiments are equally applicable to a situation where a sole UE is in the coverage area or where a sole UE is connecting to the corresponding base station 1412.

Telecommunication network 1410 is itself connected to host computer 1430, which may be embodied in the hardware and/or software of a standalone server, a cloud-implemented server, a distributed server or as processing resources in a server farm. Host computer 1430 may be under the ownership or control of a service provider, or may be operated by the service provider or on behalf of the service provider. Connections 1421 and 1422 between telecommunication network 1410 and host computer 1430 may extend directly from core network 1414 to host computer 1430 or may go via an optional intermediate network 1420. Intermediate network 1420 may be one of, or a combination of more than one of, a public, private or hosted network; intermediate network 1420, if any, may be a backbone network or the Internet; in particular, intermediate network 1420 may comprise two or more sub-networks (not shown).

The communication system of Figure 28 as a whole enables connectivity between the connected UEs 1491, 1492 and host computer 1430. The connectivity may be described as an over-the-top (OTT) connection 1450. Host computer 1430 and the connected UEs 1491, 1492 are configured to communicate data and/or signaling via OTT connection 1450, using access network 1411, core network 1414, any intermediate network 1420 and possible further infrastructure (not shown) as intermediaries. OTT connection 1450 may be transparent in the sense that the participating communication devices through which OTT connection 1450 passes are unaware of routing of uplink and downlink communications. For example, base station 1412 may not or need not be informed about the past routing of an incoming downlink communication with data originating from host computer 1430 to be forwarded (e.g., handed over) to a connected UE 1491. Similarly, base station 1412 need not be aware of the future routing of an outgoing uplink communication originating from the UE 1491 towards the host computer 1430.

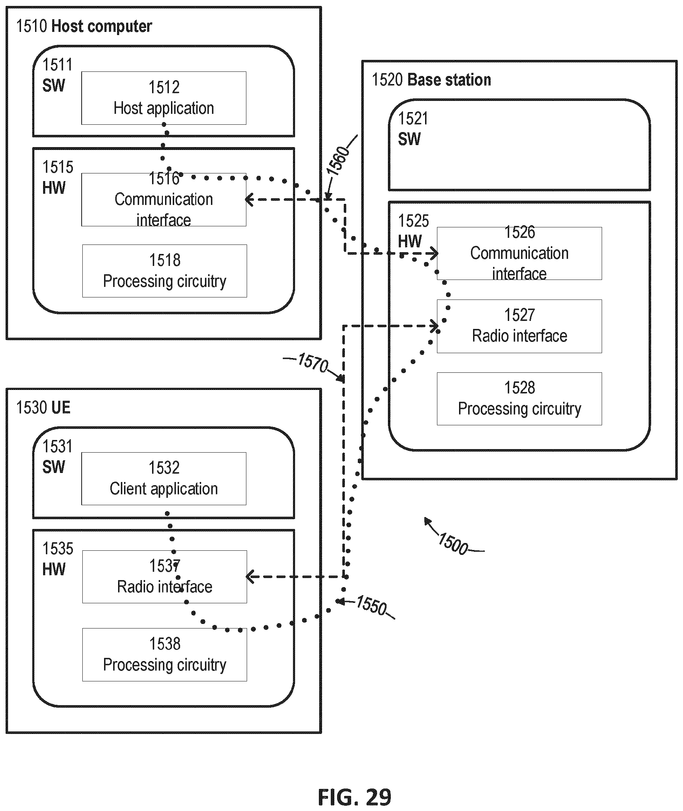

Example implementations, in accordance with an embodiment, of the UE, base station and host computer discussed in the preceding paragraphs will now be described with reference to Figure 29. Figure 29 illustrates host computer communicating via a base station with a user equipment over a partially wireless connection in accordance with some embodiments In communication system 1500, host computer 1510 comprises hardware 1515 including communication interface 1516 configured to set up and maintain a wired or wireless connection with an interface of a different communication device of communication system 1500. Host computer 1510 further comprises processing circuitry 1518, which may have storage and/or processing capabilities. In particular, processing circuitry 1518 may comprise one or more programmable processors, application-specific integrated circuits, field programmable gate arrays or combinations of these (not shown) adapted to execute instructions. Host computer 1510 further comprises software 1511, which is stored in or accessible by host computer 1510 and executable by processing circuitry 1518. Software 1511 includes host application 1512. Host application 1512 may be operable to provide a service to a remote user, such as UE 1530 connecting via OTT connection 1550 terminating at UE 1530 and host computer 1510. In providing the service to the remote user, host application 1512 may provide user data which is transmitted using OTT connection 1550.

Communication system 1500 further includes base station 1520 provided in a telecommunication system and comprising hardware 1525 enabling it to communicate with host computer 1510 and with UE 1530. Hardware 1525 may include communication interface 1526 for setting up and maintaining a wired or wireless connection with an interface of a different communication device of communication system 1500, as well as radio interface 1527 for setting up and maintaining at least wireless connection 1570 with UE 1530 located in a coverage area (not shown in Figure 29) served by base station 1520. Communication interface 1526 may be configured to facilitate connection 1560 to host computer 1510. Connection 1560 may be direct or it may pass through a core network (not shown in Figure 29) of the telecommunication system and/or through one or more intermediate networks outside the telecommunication system. In the embodiment shown, hardware 1525 of base station 1520 further includes processing circuitry 1528, which may comprise one or more programmable processors, application-specific integrated circuits, field programmable gate arrays or combinations of these (not shown) adapted to execute instructions. Base station 1520 further has software 1521 stored internally or accessible via an external connection.

Communication system 1500 further includes UE 1530 already referred to. Its hardware 1535 may include radio interface 1537 configured to set up and maintain wireless connection 1570 with a base station serving a coverage area in which UE 1530 is currently located. Hardware 1535 of UE 1530 further includes processing circuitry 1538, which may comprise one or more programmable processors, application-specific integrated circuits, field programmable gate arrays or combinations of these (not shown) adapted to execute instructions. UE 1530 further comprises software 1531, which is stored in or accessible by UE 1530 and executable by processing circuitry 1538. Software 1531 includes client application 1532. Client application 1532 may be operable to provide a service to a human or non-human user via UE 1530, with the support of host computer 1510. In host computer 1510, an executing host application 1512 may communicate with the executing client application 1532 via OTT connection 1550 terminating at UE 1530 and host computer 1510. In providing the service to the user, client application 1532 may receive request data from host application 1512 and provide user data in response to the request data. OTT connection 1550 may transfer both the request data and the user data. Client application 1532 may interact with the user to generate the user data that it provides.

It is noted that host computer 1510, base station 1520 and UE 1530 illustrated in Figure 29 may be similar or identical to host computer 1430, one of base stations 1412a, 1412b, 1412c and one of UEs 1491, 1492 of Figure 28, respectively. This is to say, the inner workings of these entities may be as shown in Figure 29 and independently, the surrounding network topology may be that of Figure 28.

In Figure 29, OTT connection 1550 has been drawn abstractly to illustrate the communication between host computer 1510 and UE 1530 via base station 1520, without explicit reference to any intermediary devices and the precise routing of messages via these devices. Network infrastructure may determine the routing, which it may be configured to hide from UE 1530 or from the service provider operating host computer 1510, or both. While OTT connection 1550 is active, the network infrastructure may further take decisions by which it dynamically changes the routing (e.g., on the basis of load balancing consideration or reconfiguration of the network).

Wireless connection 1570 between UE 1530 and base station 1520 is in accordance with the teachings of the embodiments described throughout this disclosure. One or more of the various embodiments improve the performance of OTT services provided to UE 1530 using OTT connection 1550, in which wireless connection 1570 forms the last segment. More precisely, the teachings of these embodiments may improve the synchronization between a user UE and a base station or other network node in the present of propagation delay and Doppler effects and thereby provide benefits such as improved quality of service and coverage in an NTN network.

A measurement procedure may be provided for the purpose of monitoring data rate, latency and other factors on which the one or more embodiments improve. There may further be an optional network functionality for reconfiguring OTT connection 1550 between host computer 1510 and UE 1530, in response to variations in the measurement results. The measurement procedure and/or the network functionality for reconfiguring OTT connection 1550 may be implemented in software 1511 and hardware 1515 of host computer 1510 or in software 1531 and hardware 1535 of UE 1530, or both. In embodiments, sensors (not shown) may be deployed in or in association with communication devices through which OTT connection 1550 passes; the sensors may participate in the measurement procedure by supplying values of the monitored quantities exemplified above, or supplying values of other physical quantities from which software 1511, 1531 may compute or estimate the monitored quantities. The reconfiguring of OTT connection 1550 may include message format, retransmission settings, preferred routing etc.; the reconfiguring need not affect base station 1520, and it may be unknown or imperceptible to base station 1520. Such procedures and functionalities may be known and practiced in the art. In certain embodiments, measurements may involve proprietary UE signaling facilitating host computer 1510's measurements of throughput, propagation times, latency and the like. The measurements may be implemented in that software 1511 and 1531 causes messages to be transmitted, in particular empty or 'dummy' messages, using OTT connection 1550 while it monitors propagation times, errors etc.

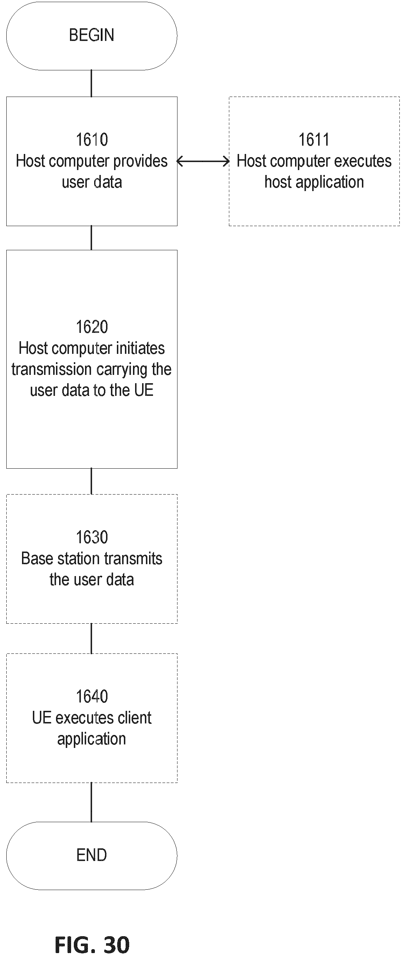

Figure 30 is a flowchart illustrating a method implemented in a communication system, in accordance with one embodiment. The communication system includes a host computer, a base station and a UE which may be those described with reference to Figures 28 and 29. For simplicity of the present disclosure, only drawing references to Figure 30 will be included in this section. In step 1610, the host computer provides user data. In substep 1611 (which may be optional) of step 1610, the host computer provides the user data by executing a host application. In step 1620, the host computer initiates a transmission carrying the user data to the UE. In step 1630 (which may be optional), the base station transmits to the UE the user data which was carried in the transmission that the host computer initiated, in accordance with the teachings of the embodiments described throughout this disclosure. In step 1640 (which may also be optional), the UE executes a client application associated with the host application executed by the host computer.

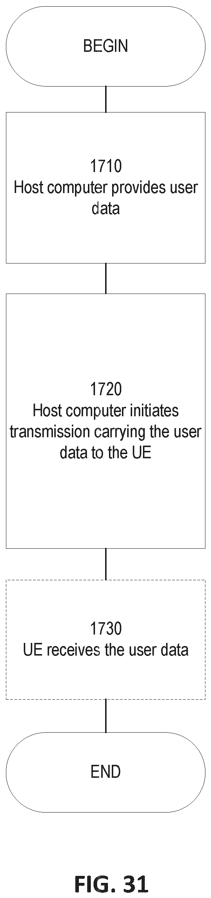

Figure 31 is a flowchart illustrating a method implemented in a communication system, in accordance with one embodiment. The communication system includes a host computer, a base station and a UE which may be those described with reference to Figures 28 and 29. For simplicity of the present disclosure, only drawing references to Figure 31 will be included in this section. In step 1710 of the method, the host computer provides user data. In an optional substep (not shown) the host computer provides the user data by executing a host application. In step 1720, the host computer initiates a transmission carrying the user data to the UE. The transmission may pass via the base station, in accordance with the teachings of the embodiments described throughout this disclosure. In step 1730 (which may be optional), the UE receives the user data carried in the transmission.

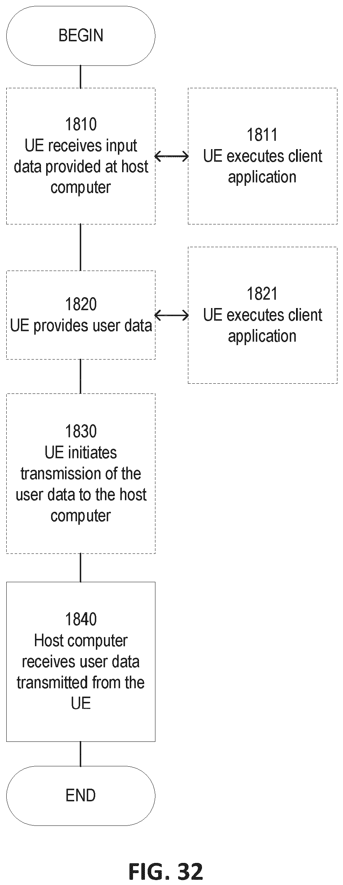

Figure 32 is a flowchart illustrating a method implemented in a communication system, in accordance with one embodiment. The communication system includes a host computer, a base station and a UE which may be those described with reference to Figures 28 and 29. For simplicity of the present disclosure, only drawing references to Figure 32 will be included in this section. In step 1810 (which may be optional), the UE receives input data provided by the host computer. Additionally or alternatively, in step 1820, the UE provides user data. In substep 1821 (which may be optional) of step 1820, the UE provides the user data by executing a client application. In substep 1811 (which may be optional) of step 1810, the UE executes a client application which provides the user data in reaction to the received input data provided by the host computer. In providing the user data, the executed client application may further consider user input received from the user. Regardless of the specific manner in which the user data was provided, the UE initiates, in substep 1830 (which may be optional), transmission of the user data to the host computer. In step 1840 of the method, the host computer receives the user data transmitted from the UE, in accordance with the teachings of the embodiments described throughout this disclosure.

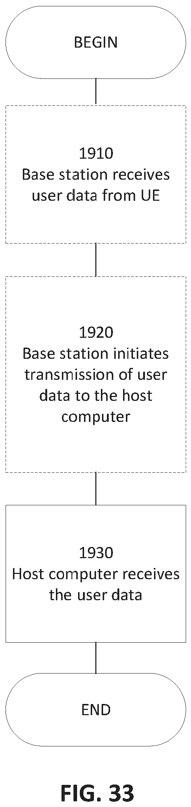

Figure 33 is a flowchart illustrating a method implemented in a communication system, in accordance with one embodiment. The communication system includes a host computer, a base station and a UE which may be those described with reference to Figures 28 and 29. For simplicity of the present disclosure, only drawing references to Figure 33 will be included in this section. In step 1910 (which may be optional), in accordance with the teachings of the embodiments described throughout this disclosure, the base station receives user data from the UE. In step 1920 (which may be optional), the base station initiates transmission of the received user data to the host computer. In step 1930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## Claims

1. A method (375) implemented by a user equipment, UE, (25, 550, 700) of maintaining synchronization with a network node (50, 500, 600) in a communications network comprising a non-terrestrial network, NTN, the method (375) comprising:
receiving (380), from the network node (50, 500, 600), system information, SI, including an indication to report a timing advance;
transmitting (385) a random access preamble to initiate a connection with the network node (50, 500, 600);
receiving (390), from the network node (50, 500, 600) responsive to the random access preamble, a random access response; and
transmitting (395), to the network node (50, 500, 600), a connection request including the timing advance according to the indication.

2. The method according to claim 1, wherein the timing advance is reported in NTN random access MSG3 indicating the timing advance applied when transmitting MSG1.

3. The method of any of claim 2, wherein the timing advance is reported by the UE sending a MAC CE.

4. A method (350) implemented by a network node (50, 500, 600) in a non-terrestrial network of maintaining synchronization with a user equipment, UE, (25, 550, 700), the method (350) comprising:
transmitting (355) system information, SI, to the UE, the SI including an indication to report a timing advance;
receiving (360) a random access preamble transmitted by the UE (25, 450, 700) on a physical random access channel, PRACH;
sending (365), to the UE, a random access response responsive to receipt of the random access preamble; and
receiving (370), from the UE, a connection request including a timing advance according to the indication.

5. The method according to claim 4, wherein the timing advance is reported in NTN random access MSG3 indicating the timing advance applied when the UE transmitted MSG1.

6. The method of any of claim 5, wherein the timing advance is reported by the UE sending a MAC CE.

7. A user equipment, UE, (25, 550, 700) configured to:
receive, from a network node (50, 500, 600), system information, SI, including an indication to report a timing advance;
transmit a random access preamble to initiate a connection with the network node (50, 500, 600);
receive, from the network node (50, 500, 600) responsive to the random access preamble, a random access response; and
transmit, to the network node (50, 500, 600), a connection request including the timing advance according to the indication.

8. The UE according to claim 7, wherein the timing advance is reported in a non-terrestrial network, NTN, random access MSG3 indicating the timing advance applied when transmitting MSG1.

9. The UE according to claim 8, wherein the timing advance is reported by the UE sending a MAC CE.

10. A computer program (750) comprising executable instructions that, when executed by a processing circuit (730) in a user equipment, UE, (25, 550, 700) causes the UE to perform any of the methods of claims 1 to 3.

11. A network node (50, 500, 600) for a non-terrestrial network, NTN, the network node (50, 500, 600) being configured to:
transmit system information, SI, to the UE, the SI including an indication to report a timing advance;
receive a random access preamble transmitted by the UE (25, 550, 700) on a physical random access channel, PRACH;
send, to the UE, a random access response responsive to receipt of the random access preamble; and
receive, from the UE, a connection request including a timing advance according to the indication.

12. The network node according to claim 11, wherein the timing advance is reported in NTN random access MSG3 indicating the timing advance applied when transmitting MSG1.

13. The network node according to claim 12 wherein the timing advance is reported by the UE sending a MAC CE.

14. A computer program (650) comprising executable instructions that, when executed by a processing circuit (630) in a network node (50, 500, 600) in a non-terrestrial network, causes the network node to perform any of the methods of claims 4 to 6.

## Patentansprüche

1. Verfahren (375), das durch eine Benutzereinrichtung, UE, (25, 550, 700) umgesetzt wird, zum Aufrechterhalten einer Synchronisation mit einem Netzknoten (50, 500, 600) in einem Kommunikationsnetz, das ein nichtterrestrischen Netz, NTN, umfasst, wobei das Verfahren (375) Folgendes umfasst:
Empfangen (380), von dem Netzknoten (50, 500, 600), von Systeminformationen, SI, die eine Angabe zum Melden eines Zeitvorlaufs beinhalten;
Übertragen (385) einer Direktzugriffspräambel, um eine Verbindung mit dem Netzknoten (50, 500, 600) zu initiieren;
Empfangen (390), von dem Netzknoten (50, 500, 600) als Antwort auf die Direktzugriffspräambel, einer Direktzugriffsantwort; und
Übertragen (395), an den Netzknoten (50, 500, 600), einer Verbindungsanforderung, die den Zeitvorlauf gemäß der Angabe beinhaltet.

2. Verfahren nach Anspruch 1, wobei der Zeitvorlauf in einer NTN-Direktzugriffs-MSG3 gemeldet wird, die den Zeitvorlauf angibt, der beim Übertragen einer MSG1 angewendet wird.

3. Verfahren nach Anspruch 2, wobei der Zeitvorlauf durch die UE, die ein MAC-CE sendet, gemeldet wird.

4. Verfahren (350), das durch einen Netzknoten (50, 500, 600) in einem nichtterrestrischen Netz umgesetzt wird, zum Aufrechterhalten einer Synchronisation mit einer Benutzereinrichtung, UE, (25, 550, 700), wobei das Verfahren (350) Folgendes umfasst:
Übertragen (355) von Systeminformationen, SI, an die UE, wobei die SI eine Angabe zum Melden eines Zeitvorlaufs beinhalten;
Empfangen (360) einer Direktzugriffspräambel, die durch die UE (25, 450, 700) auf einem physikalischen Direktzugriffskanal, PRACH, übertragen wird;
Senden (365), an die UE, einer Direktzugriffsantwort als Antwort auf den Empfang der Direktzugriffspräambel; und
Empfangen (370), von der UE, einer Verbindungsanforderung, die einen Zeitvorlauf gemäß der Angabe beinhaltet.

5. Verfahren nach Anspruch 4, wobei der Zeitvorlauf in einer NTN-Direktzugriffs-MSG3 gemeldet wird, die den Zeitvorlauf angibt, der angewendet wurde, als die UE die MSG1 übertrug.

6. Verfahren nach Anspruch 5, wobei der Zeitvorlauf durch die UE, die ein MAC-CE sendet, gemeldet wird.

7. Benutzereinrichtung, UE, (25, 550, 700), die zu Folgendem konfiguriert ist:
Empfangen, von einem Netzknoten (50, 500, 600), von Systeminformationen, SI, die eine Angabe zum Melden eines Zeitvorlaufs beinhalten;
Übertragen einer Direktzugriffspräambel, um eine Verbindung mit dem Netzknoten (50, 500, 600) zu initiieren;
Empfangen, von dem Netzknoten (50, 500, 600) als Antwort auf die Direktzugriffspräambel, einer Direktzugriffsantwort; und
Übertragen, an den Netzknoten (50, 500, 600), einer Verbindungsanforderung, die den Zeitvorlauf gemäß der Angabe beinhaltet.

8. UE nach Anspruch 7, wobei der Zeitvorlauf in einer Direktzugriffs-MSG3 eines nichtterrestrischen Netzes, NTN, gemeldet wird, die den Zeitvorlauf angibt, der beim Übertragen einer MSG1 angewendet wird.

9. UE nach Anspruch 8, wobei der Zeitvorlauf durch die UE, die ein MAC-CE sendet, gemeldet wird.

10. Computerprogramm (750), das ausführbare Anweisungen umfasst, die, wenn sie durch eine Verarbeitungsschaltung (730) in einer Benutzereinrichtung, UE, (25, 550, 700) ausgeführt werden, die UE dazu veranlassen, eines der Verfahren nach Anspruch 1 bis 3 durchzuführen.

11. Netzknoten (50, 500, 600) für ein nichtterrestrisches Netz, NTN, wobei der Netzknoten (50, 500, 600) zu Folgendem konfiguriert ist:
Übertragen von Systeminformationen, SI, an die UE, wobei die SI eine Angabe zum Melden eines Zeitvorlaufs beinhalten;
Empfangen einer Direktzugriffspräambel, die durch die UE (25, 550, 700) auf einem physikalischen Direktzugriffskanal, PRACH, übertragen wird;
Senden, an die UE, einer Direktzugriffsantwort als Antwort auf den Empfang der Direktzugriffspräambel; und
Empfangen, von der UE, einer Verbindungsanforderung, die einen Zeitvorlauf gemäß der Angabe beinhaltet.

12. Netzknoten nach Anspruch 11, wobei der Zeitvorlauf in einer NTN-Direktzugriffs-MSG3 gemeldet wird, die den Zeitvorlauf angibt, der beim Übertragen einer MSG1 angewendet wird.

13. Netzknoten nach Anspruch 12, wobei der Zeitvorlauf durch die UE, die ein MAC-CE sendet, gemeldet wird.

14. Computerprogramm (650), das ausführbare Anweisungen umfasst, die, wenn sie durch eine Verarbeitungsschaltung (630) in einem Netzknoten (50, 500, 600) in einem nichtterrestrischen Netz ausgeführt werden, den Netzknoten dazu veranlassen, eines der Verfahren nach Anspruch 4 bis 6 durchzuführen.

## Revendications

1. Procédé (375) mis en œuvre par un équipement utilisateur, UE, (25, 550, 700) de maintien de synchronisation avec un nœud de réseau (50, 500, 600) dans un réseau de communications comprenant un réseau non terrestre, NTN, le procédé (375) comprenant :
la réception (380), en provenance du nœud de réseau (50, 500, 600), d'informations de système, SI, incluant une indication de rapporter une avance de temporisation ;
la transmission (385) d'un préambule d'accès aléatoire pour initier une connexion avec le nœud de réseau (50, 500, 600) ;
la réception (390), en provenance du nœud de réseau (50, 500, 600) en réponse au préambule d'accès aléatoire, d'une réponse d'accès aléatoire ; et
la transmission (395), vers le nœud de réseau (50, 500, 600), d'une demande de connexion incluant l'avance de temporisation selon l'indication.

2. Procédé selon la revendication 1, dans lequel l'avance de temporisation est rapportée dans un MSG3 d'accès aléatoire de NTN indiquant l'avance de temporisation appliquée lors de la transmission du MSG1.

3. Procédé selon la revendication 2, dans lequel l'avance de temporisation est rapportée par l'UE envoyant un MAC CE.

4. Procédé (350) mis en œuvre par un nœud de réseau (50, 500, 600) dans un réseau non terrestre de maintien de synchronisation avec un équipement utilisateur, UE, (25, 550, 700), le procédé (350) comprenant :
la transmission (355) d'informations de système, SI, vers l'UE, les SI incluant une indication de rapporter une avance de temporisation ;
la réception (360) d'un préambule d'accès aléatoire transmis par l'UE (25, 450, 700) sur un canal physique d'accès aléatoire, PRACH ;
l'envoi (365), vers l'UE, d'une réponse d'accès aléatoire en réponse à la réception du préambule d'accès aléatoire ; et
la réception (370), en provenance de l'UE, d'une demande de connexion incluant une avance de temporisation selon l'indication.

5. Procédé selon la revendication 4, dans lequel l'avance de temporisation est rapportée dans un MSG3 d'accès aléatoire de NTN indiquant l'avance de temporisation appliquée lorsque l'UE a transmis le MSG1.

6. Procédé selon la revendication 5, dans lequel l'avance de temporisation est rapportée par l'UE envoyant un MAC CE.

7. Équipement utilisateur, UE, (25, 550, 700) configuré pour :
recevoir, en provenance d'un nœud de réseau (50, 500, 600), des informations de système, SI, incluant une indication de rapporter une avance de temporisation ;
transmettre un préambule d'accès aléatoire pour initier une connexion avec le nœud de réseau (50, 500, 600) ;
recevoir, en provenance du nœud de réseau (50, 500, 600) en réponse au préambule d'accès aléatoire, une réponse d'accès aléatoire ; et
transmettre, vers le nœud de réseau (50, 500, 600), une demande de connexion incluant l'avance de temporisation selon l'indication.

8. UE selon la revendication 7, dans lequel l'avance de temporisation est rapportée dans un MSG3 d'accès aléatoire de réseau non terrestre, NTN, indiquant l'avance de temporisation appliquée lors de la transmission du MSG1.

9. UE selon la revendication 8, dans lequel l'avance de temporisation est rapportée par l'UE envoyant un MAC CE.

10. Programme informatique (750) comprenant des instructions exécutables qui, lorsqu'elles sont exécutées par un circuit de traitement (730) dans un équipement utilisateur, UE, (25, 550, 700), amènent l'UE à réaliser l'un quelconque des procédés des revendications 1 à 3.

11. Nœud de réseau (50, 500, 600) pour un réseau non terrestre, NTN, le nœud de réseau (50, 500, 600) étant configuré pour :
transmettre des informations de système, SI, vers l'UE, les SI incluant une indication de rapporter une avance de temporisation ;
recevoir un préambule d'accès aléatoire transmis par l'UE (25, 550, 700) sur un canal physique d'accès aléatoire, PRACH ;
envoyer, vers l'UE, une réponse d'accès aléatoire en réponse à la réception du préambule d'accès aléatoire ; et
recevoir, en provenance de l'UE, une demande de connexion incluant une avance de temporisation selon l'indication.

12. Nœud de réseau selon la revendication 11, dans lequel l'avance de temporisation est rapportée dans un MSG3 d'accès aléatoire de NTN indiquant l'avance de temporisation appliquée lors de la transmission du MSG1.

13. Nœud de réseau selon la revendication 12, dans lequel l'avance de temporisation est rapportée par l'UE envoyant un MAC CE.

14. Programme informatique (650) comprenant des instructions exécutables qui, lorsqu'elles sont exécutées par un circuit de traitement (630) dans un nœud de réseau (50, 500, 600) dans un réseau non terrestre, amènent le nœud de réseau à réaliser l'un quelconque des procédés des revendications 4 à 6.
